# EUROPEAN PATENT APPLICATION

(11) **EP 4 742 165 A1**
(43) Date of publication of application: **13.05.2026**
(21) Application number: 24884020.9
(22) Date of filing: 08.07.2024
(51) Int. Cl.: G06T 13/20

(54) **GENERATION METHOD AND GENERATION APPARATUS FOR ANIMATION, AND ELECTRONIC DEVICE**

(30) Priority: 30.10.2023 CN 202311435092
(71) Applicant: Huawei Technologies Co., Ltd., Shenzhen, Guangdong 518129 (CN)
(72) Inventor: JIANG, Wenming, Shenzhen, Guangdong 518129 (CN); CAO, Yuan, Shenzhen, Guangdong 518129 (CN); ZHANG, Chao, Shenzhen, Guangdong 518129 (CN); JU, Ran, Shenzhen, Guangdong 518129 (CN); CHEN, Yugang, Shenzhen, Guangdong 518129 (CN); WU, Guoxing, Shenzhen, Guangdong 518129 (CN); YANG, Ouya, Shenzhen, Guangdong 518129 (CN)
(74) Representative: Pfenning, Meinig & Partner mbB
(86) International application number: PCT/CN2024/104283
(87) International publication number: WO 2025/092012

(57) **Abstract**

This application provides a generation method and generation apparatus for an animation, and an electronic device, and relates to the field of image processing technologies. The generation method includes: The electronic device obtains a first image under an operation of a user and performs content understanding on the first image, then determines a first camera movement direction based on display content of the first image, and subsequently generates an animation based on the first camera movement direction and the first image. The first camera movement direction is a camera movement direction corresponding to the animation. That is, the animation displays the first image to the user based on the first camera movement direction. In this application, the camera movement direction can be determined based on the display content of the image, and camera movements can be flexibly utilized based on the image content, so that a sense of image and immersion of the animation is enhanced and a high-quality animation with harmonious camera movements can be generated, thereby improving display effect of the animation.

## Description

This application claims priority to Chinese Patent Application No. 202311435092.1, filed with the China National Intellectual Property Administration on October 30, 2023 and entitled "GENERATION METHOD AND GENERATION APPARATUS FOR ANIMATION, AND ELECTRONIC DEVICE", which is incorporated herein by reference in its entirety.

### TECHNICAL FIELD

This application relates to the field of image processing technologies, and in particular, to a generation method and generation apparatus for an animation, and an electronic device.

### BACKGROUND

With continuous development of terminal technologies, an increasing number of users start to use images to record their lives. For some satisfactory images, the user also wants to make an animation for playing and displaying. To meet this demand, a technology of generating an animation from an image has emerged. The user may combine a plurality of images from a local gallery, stitch the images together into an animation, and then share the animation to a social platform. The animation may also be used as a dynamic wallpaper for a desktop or a screensaver, thereby expanding sources of dynamic wallpapers on a terminal.

When a terminal device generates an animation from an image, camera movements may be applied to the image for display, to improve image display effect in the animation. For example, the image in the animation may be displayed from left to right, from top to bottom, or with zooming effect.

At present, when the terminal device generates the animation with camera movement display effect, the terminal device may process the image in the animation based on a preset camera movement direction. For example, if the preset camera movement direction is from left to right, the image is displayed in the generated animation in accordance with the camera movement direction from left to right. However, a plurality of images are usually added to the animation. In a conventional technology, the plurality of images can be displayed only in a fixed camera movement direction, which is not flexible enough in the use of camera movements, resulting in poor display effect of the animation.

### SUMMARY

Embodiments of this application provide a generation method and generation apparatus for an animation, and an electronic device, so that a camera movement direction can be determined based on display content of an image, and a high-quality animation with harmonious camera movements can be generated, thereby improving display effect of the animation.

According to a first aspect, a generation method for an animation is provided, including: obtaining a first image; determining a first camera movement direction based on display content of the first image; and generating the animation based on the first camera movement direction and the first image, where the first camera movement direction is a camera movement direction corresponding to the animation.

According to the generation method for an animation provided in this embodiment of this application, a camera movement direction (denoted as a first camera movement direction) may be first determined based on display content of an image (denoted as a first image), and then the animation is generated based on the first camera movement direction and the first image. That is, the first image is displayed based on the first camera movement direction, thereby generating the animation. Because the camera movement direction is determined based on the display content of the image, the camera movement direction can be associated and matched with the display content of the image, and camera movements can be flexibly utilized based on the image content, so that a sense of image and immersion of the animation is enhanced and a high-quality animation with harmonious camera movements can be generated, thereby improving display effect of the animation.

Because association and matching is implemented between the camera movement direction and the display content of the image and use of the camera movements is more harmonious and smoother, the generated animation has higher quality and a stronger sense of image. This improves display effect of the animation, thereby providing the user with coherent immersive experience, and improving visual experience of the user.

Optionally, the first image may be obtained by an electronic device through photographing, or may be from the internet (for example, a social platform).

Optionally, the first image may alternatively be obtained from another animation. The another animation may be, for example, a GIF image or a video. For example, the first image may be obtained by taking a screenshot of a video or by extracting a frame from a video. A specific source of the first image is not limited in this application.

Optionally, a specific manner of "determining the first camera movement direction based on the image content" is not limited in this embodiment of this application. For example, a photographed subject in the first image may be recognized, and the first camera movement direction is determined based on a type of the photographed subject. The photographed subject herein may be, for example, a human, an animal, a plant, a mountain, a river, a toy, jewelry, fruit, a building, furniture, the sun, the moon, or a vehicle, but this is not limited thereto. Alternatively, the first camera movement direction may be determined based on a more specific type of the recognized photographed subject. For example, types of animals may be further classified into cats, dogs, lions, elephants, birds, or the like, and the first camera movement direction may be different for different types of animals. Additionally/Alternatively, the first camera movement direction may be determined based on factors such as a quantity of photographed subjects, a position of the photographed subject in an image, and a proportion of the image occupied by the photographed subject. The first camera movement direction may be further determined based on factors such as a layout and a tone of the image. In addition, when the photographed subject is a person, the first camera movement direction may be further determined based on factors such as an expression, an action, and a gesture of the person.

Optionally, when the animation is generated by using a plurality of images together, the "animation" in "the first camera movement direction is a camera movement direction corresponding to the animation" may also be understood as or replaced with an animation segment. For example, the plurality of images include a first image and a second image. An animation segment corresponding to the first image is a first animation segment, and an animation segment corresponding to the second image is a second animation segment. The first camera movement direction is a camera movement direction corresponding to the first animation segment, and a second camera movement direction is a camera movement direction corresponding to the second animation segment. The first animation segment and the second animation segment are spliced to form a complete animation.

In a possible implementation, determining the first camera movement direction based on the display content of the first image includes: recognizing the display content of the first image to obtain a first pointing direction of a target object; and determining the first camera movement direction based on the first pointing direction.

The camera movement direction is determined by using pointing information of the target object in the image, so that a degree of matching between the determined camera movement direction and the image content can be higher and use of the camera movements is more harmonious and smoother, thereby enhancing a sense of image and immersion of the animation. This helps generate a high-quality animation with harmonious camera movements, thereby improving display effect of the animation and improving playability and entertainment.

Optionally, the target object may be any object in the first image, for example, a person, an animal, a plant (for example, a tree), a scene (for example, a mountain or a river), a building (for example, a house or a bridge), a road, a toy, jewelry, fruit, furniture, the sun, the moon, or a vehicle, but this is not limited thereto.

Optionally, the target object may be a photographed subject, or may not be a photographed subject. For example, the target object may be a river or a road in a shooting background. This is not limited in this application.

Optionally, the display content of the first image may be understood based on an image-understanding neural network model, to obtain or determine the first pointing direction.

In a possible implementation, before recognizing the display content of the first image to obtain the first pointing direction of the target object, the method further includes: recognizing the display content of the first image to obtain a plurality of objects; and determining the target object based on the plurality of objects.

In other words, in some scenarios, when the first image is recognized, a plurality of objects (for example, a plurality of persons) may be recognized. In this case, the target object may be first determined based on the plurality of objects, and then the first pointing direction corresponding to the target object is recognized. According to the foregoing settings, the generation method provided in this application can meet use requirements in more scenarios, or the generation method provided in this application has a wider application scope. A specific implementation of determining the target object based on the plurality of objects is not specifically limited in this application.

In a possible implementation, determining the target object based on the plurality of objects includes: determining a photographed subject in the plurality of objects as the target object; or determining the target object from the plurality of objects based on preset priority information; or determining the target object from the plurality of objects based on proportions of an image occupied by the plurality of objects; or randomly selecting the plurality of objects to obtain the target object.

In other words, the electronic device performs content understanding on the first image, and may recognize a plurality of objects. In this case, the electronic device may determine the target object based on the plurality of objects according to a preset logic rule. Optionally, the electronic device may determine a photographed subject (for example, a person or an animal) in the plurality of objects as the target object. Optionally, the electronic device may determine an object with a highest priority as the target object based on the preset priority information. For example, different objects such as a person, a river, a tree, a building, and a road have different priorities, and the person with the highest priority may be determined as the target object. Optionally, the electronic device may alternatively determine, from the plurality of objects, an object occupying a largest proportion of the image as the target object. For example, if there are a plurality of persons in the image, a person occupying a largest proportion of the image may be determined as the target object. Optionally, the plurality of objects may be randomly selected, and a selected object is determined as the target object.

In a possible implementation, determining the first camera movement direction based on the first pointing direction includes: determining a direction along the first pointing direction as the first camera movement direction; or determining a direction opposite to the first pointing direction as the first camera movement direction.

A direction along or opposite to the first pointing direction is determined as the first camera movement direction. The method is simple and easy to implement, and the first camera movement direction can be better associated and matched with the image content, so that a sense of image and immersion of the animation is enhanced, thereby improving visual experience of the user.

Optionally, the first pointing direction may be a gaze direction from bottom left to top right, and the first camera movement direction is a direction opposite to (against) the gaze direction. For example, the first camera movement direction may be right-to-left, top-to-bottom, or top-right-to-bottom-left (that is, a combination of the two directions right-to-left and top-to-bottom). This is not limited in this application. A case in another direction is similar, and details are not described herein again.

Optionally, a direction along the first pointing direction may alternatively be determined as the first camera movement direction. For the gaze direction from bottom left to top right, the first camera movement direction may be left-to-right, bottom-to-top, or bottom-left-to-top-right (that is, a combination of the two directions left-to-right and bottom-to-top). This is not limited in this application. A case in another direction is similar, and details are not described herein again.

In a possible implementation, the first pointing direction includes a face orientation, a gaze direction, a movement direction, or an extension direction.

For example, the first pointing direction may be a face orientation or a gaze direction of a photographed subject (for example, a person or an animal), or may be a movement direction of a person, an animal, or an object, or may be an extension direction of a path, a river, or the like.

For example, the target object may be a person, and the face orientation or the gaze direction may be determined by using a facial feature recognition (detection) algorithm (for example, a deep neural network model).

Optionally, the target object herein belongs to any object in the first image, and may be a photographed subject, or may not be the photographed subject. For example, the target object may be an object in a background in which the photographed subject is located. For example, the target object may be a person, an animal, or a movable non-biological object (for example, an object such as a balloon, a white cloud, or a car) in the first image. In this case, the first pointing direction may be a movement direction of the person, the animal, or the object. For another example, the target object may be a river or a path. In this case, the first pointing direction may be an extension direction of the river or the path, but this is not limited thereto.

In a possible implementation, the first pointing direction includes at least one of front-to-back, back-to-front, left-to-right, right-to-left, top-to-bottom, and bottom-to-top.

Optionally, the directions described above may be defined by using a camera of the camera movement as a reference. Left-to-right, right-to-left, top-to-bottom, and bottom-to-top are all planar movements within the image (plane). Four directions of up, down, left, and right are directions of up, down, left, and right of the image as perceived by naked eyes of the user, while directions of front and back are directions perpendicular to the image (plane), with a direction toward the plane being forward, and a direction away from the plane being backward. Therefore, the foregoing front-to-back is a direction away from the image (plane), while the back-to-front is a direction gradually approaching the image (plane).

In a possible implementation, determining the first camera movement direction based on the display content of the first image includes: recognizing the display content of the first image to obtain a plurality of pointing directions; and determining the first camera movement direction based on the plurality of pointing directions.

In other words, in some scenarios, when the first image is recognized, a plurality of first pointing directions (for example, a plurality of gaze directions or face orientations) may be recognized. In this case, the first camera movement direction may be jointly determined based on the plurality of pointing directions. According to the foregoing settings, the generation method provided in this application can meet use requirements in more scenarios, or the generation method provided in this application has a wider application scope. A specific implementation of determining the first camera movement direction based on the plurality of pointing directions is not specifically limited in this application.

In a possible implementation, determining the first camera movement direction based on the plurality of pointing directions includes: determining the first pointing direction from the plurality of pointing directions based on the preset priority information, and determining the first camera movement direction based on the first pointing direction; or determining the first pointing direction from the plurality of pointing directions based on other display information in the display content of the first image, and determining the first camera movement direction based on the first pointing direction, where the other display information is information other than the plurality of pointing directions; or determining the first camera movement direction based on the plurality of pointing directions and a preset artificial intelligence model.

In other words, the electronic device performs content understanding on the first image, and may recognize a plurality of pointing directions. In this case, the electronic device may determine the first camera movement direction based on the plurality of pointing directions according to a preset logic rule. For example, the electronic device may determine the first camera movement direction by using a pointing direction (for example, a face orientation or a gaze direction) with a highest priority based on the preset priority information. For another example, the electronic device may determine the first pointing direction from a plurality of pointing directions with reference to other information (for example, a type, a layout, and a proportion of the image occupied by the photographed subject) of the image content, and then determine the first camera movement direction based on the first pointing direction. For another example, the plurality of pointing directions may be used as input parameters, and the first camera movement direction may be jointly determined according to a preset rule or algorithm (for example, an AI model). A specific implementation is not limited in this application.

Optionally, the plurality of pointing directions include at least one of a face orientation, a gaze direction, a movement direction, or an extension direction. For example, the plurality of pointing directions include a plurality of face orientations, or include a plurality of gaze directions, or include at least one face orientation (gaze direction) and at least one movement direction of a person or an object, or may further include an extension direction of a water flow or a path.

In a possible implementation, the generation method further includes: obtaining a depth map of the first image; and generating the animation based on the first camera movement direction and the first image includes: generating the animation based on the first camera movement direction, the depth map, and the first image.

Through the foregoing settings, the generated animation has 3D effect. Under different camera movement perspectives, relative sizes and relative positions (distances) of different objects in the image can vary, thereby enhancing a sense of image and immersion of the animation, improving display effect of the animation, and improving watching experience of the user.

Optionally, the depth map may alternatively be obtained by using a stereoscopic camera or a time of flight (time of flight, TOF) camera. That is, in a process of obtaining the first image, the camera further obtains the depth map corresponding to the first image. In other words, the first image itself includes depth map information.

In a possible implementation, obtaining the depth map of the first image includes: performing monocular depth estimation on the first image to obtain the depth map.

In a possible implementation, generating the animation based on the first camera movement direction, the depth map, and the first image includes: performing depth layering on the depth map to identify a depth edge region; performing color filling on the depth edge region to obtain an edge background image; generating a 3D point cloud based on the first image, the depth map, and the edge background image; and generating the animation based on the first camera movement direction and the 3D point cloud.

Optionally, the 3D point cloud may include color information at different positions. In this case, the animation may be directly generated based on the first camera movement direction and the 3D point cloud.

Optionally, when the 3D point cloud does not include the color information, the animation may be generated based on the first camera movement direction, the 3D point cloud, and (color information of) the first image.

In a possible implementation, the generation method further includes displaying the animation.

Optionally, the animation herein may be animation effect (dynamic effect) that is rendered and displayed (temporarily output) in real time by the electronic device during display. The temporarily output animation effect may further be generated or saved as a video file or a dynamic GIF image, for playing in subsequent display or for convenient social sharing by the user.

In a possible implementation, the animation is displayed as a dynamic wallpaper. In this way, a source of the dynamic wallpaper of a terminal can be broadened.

In a possible implementation, the animation is a video or an image in a graphics interchange format (graphics interchange format, GIF), but this is not limited thereto. For example, the animation may alternatively be a dynamic image in another format.

According to a second aspect, a generation apparatus for an animation is provided, including: an obtaining unit, configured to obtain a first image; a determining unit, configured to determine a first camera movement direction based on display content of the first image; and a generation unit, configured to generate the animation based on the first camera movement direction and the first image, where the first camera movement direction is a camera movement direction corresponding to the animation.

In a possible implementation, the determining unit is specifically configured to: recognize the display content of the first image to obtain a first pointing direction of a target object; and determine the first camera movement direction based on the first pointing direction.

In a possible implementation, before recognizing the display content of the first image to obtain the first pointing direction of the target object, the determining unit is specifically configured to: recognize the display content of the first image to obtain a plurality of objects; and determine the target object based on the plurality of objects.

In a possible implementation, the determining unit is specifically configured to: determine a photographed subject in the plurality of objects as the target object; or determine the target object from the plurality of objects based on preset priority information; or determine the target object from the plurality of objects based on proportions of an image occupied by the plurality of objects; or randomly select the plurality of objects to obtain the target object.

In a possible implementation, the determining unit is specifically configured to: determine a direction along the first pointing direction as the first camera movement direction; or determine a direction opposite to the first pointing direction as the first camera movement direction.

In a possible implementation, the first pointing direction includes a face orientation, a gaze direction, a movement direction, or an extension direction.

In a possible implementation, the first pointing direction includes at least one of front-to-back, back-to-front, left-to-right, right-to-left, top-to-bottom, and bottom-to-top.

In a possible implementation, the determining unit is specifically configured to: recognize the display content of the first image to obtain a plurality of pointing directions; and determine the first camera movement direction based on the plurality of pointing directions.

In a possible implementation, the obtaining unit is further configured to obtain a depth map of the first image. The generation unit is specifically configured to generate the animation based on the first camera movement direction, the depth map, and the first image.

In a possible implementation, the obtaining unit is specifically configured to perform monocular depth estimation on the first image to obtain the depth map.

In a possible implementation, the generation unit is specifically configured to: perform depth layering on the depth map to identify a depth edge region; perform color filling on the depth edge region to obtain an edge background image; generate a 3D point cloud based on the first image, the depth map, and the edge background image; and generate the animation based on the first camera movement direction and the 3D point cloud.

In a possible implementation, the generation apparatus further includes a display unit, configured to display the animation.

In a possible implementation, the animation is displayed as a dynamic wallpaper.

In a possible implementation, the animation is a video or a GIF image.

According to a third aspect, an electronic device is provided, including: a memory, storing instructions; and a processor. When the instructions are run by the processor, the electronic device is enabled to perform the method according to any possible implementation of the first aspect.

According to a fourth aspect, a computer-readable storage medium is provided. The computer-readable storage medium stores a computer program. When the computer program is run on a computer, the computer is enabled to perform the method according to any possible implementation of the first aspect.

According to a fifth aspect, a computer program product is provided, including computer program code. When the computer program code is run on a computer, the computer is enabled to perform the method according to any possible implementation of the first aspect.

According to a sixth aspect, a chip is provided, including: a processor, configured to invoke a computer program from a memory and run the computer program, so that an electronic device on which the chip is installed performs the method according to any possible implementation of the first aspect.

It may be understood that the generation apparatus for an animation according to the second aspect, the electronic device according to the third aspect, the computer-readable storage medium according to the fourth aspect, the computer program product according to the fifth aspect, and the chip according to the sixth aspect are all configured to perform the method according to the first aspect. Therefore, for beneficial effects that can be achieved by the generation apparatus for an animation, the electronic device, the computer-readable storage medium, the computer program product, and the chip, refer to beneficial effects in the corresponding method provided above. Details are not described herein again.

### BRIEF DESCRIPTION OF DRAWINGS

FIG. 1A to FIG. 1D are a diagram of a push shot according to an embodiment of this application;
FIG. 2A to FIG. 2D are a diagram of a pull shot according to an embodiment of this application;
FIG. 3A to FIG. 3D are a diagram of a tracking shot according to an embodiment of this application;
FIG. 4 is a diagram of a pan shot according to an embodiment of this application;
FIG. 5 is a diagram of a structure of an electronic device according to an embodiment of this application;
FIG. 6 is a block diagram of a software structure of an electronic device according to an embodiment of this application;
FIG. 7(a) to FIG. 7(f) are a diagram of human-computer interaction in an application scenario according to an embodiment of this application;
FIG. 8 is a diagram of a playing process of an animation generated in a scenario shown in FIG. 7(a) to FIG. 7(f);
FIG. 9(a) to FIG. 9(c) are a diagram of human-computer interaction in another application scenario according to an embodiment of this application;
FIG. 10 is a diagram of an example of a playing process of a first image in an animation generated in a scenario in FIG. 9(a) to FIG. 9(c);
FIG. 11 is a diagram of another example of a playing process of a first image;
FIG. 12 is a diagram of still another example of a playing process of a first image;
FIG. 13 is a diagram of a playing process of a second image in an animation generated in a scenario in FIG. 9(a) to FIG. 9(c);
FIG. 14 is a diagram of a plurality of examples of a first pointing direction of a first image;
FIG. 15 is a diagram of still yet another example of a playing process of a first image;
FIG. 16 is a schematic flowchart of generating a 3D animation according to a first image;
FIG. 17 is a schematic flowchart of a generation method for an animation according to an embodiment of this application; and
FIG. 18 is a block diagram of a generation apparatus for an animation according to an embodiment of this application.

### DESCRIPTION OF EMBODIMENTS

The following describes technical solutions of this application with reference to accompanying drawings. Apparently, the described embodiments are merely some rather than all of embodiments of this application.

In the following description, for illustration instead of limitation, specific details such as a specific system structure and technology are provided, to make a thorough understanding of embodiments of this application. However, a person skilled in the art should understand that this application may also be implemented in other embodiments without these specific details. In other cases, detailed descriptions of a well-known system, apparatus, circuit, and method are omitted, to prevent unnecessary details from obscuring descriptions of this application.

The term "include" in this specification indicates existence of described features, entities, steps, operations, elements, and/or components, but does not exclude existence or addition of one or more other features, entireties, steps, operations, elements, components, and/or sets thereof. The terms "include", "comprise", "have", and variants thereof all mean "including but not limited to", unless otherwise specifically emphasized in another manner. In the following, terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

With continuous development of terminal technologies, an increasing number of users start to use images to record their lives. For some satisfactory images, for example, captured landscape photos, the user also wants to make an animation for playing and displaying. To meet this demand, a technology (for example, a slideshow display technology) of generating an animation from an image has emerged. The user may combine a plurality of images from a local gallery, stitch the images together into an animation, and then share the animation to a social platform. In some cases, the animation may also be generated from a single image, and the animation may also be used as a dynamic wallpaper for a desktop or a screensaver, thereby expanding sources of dynamic wallpapers on a terminal.

A camera movement usually means a movement of a camera. During video shooting, camera movements, as an important narrative form of expression, can embody creative flexibility and artistic value. Proper use of camera movements in a video helps to portray individual's images and traits, establish a scene atmosphere, and further promotes progression of video narration. Different types of camera movement can control different rhythms in narration and can bring diverse visual experiences and psychological implications. When a terminal device generates an animation from an image, camera movements may be applied to the image for display, to improve image display effect in the video. For example, the image in the video may be displayed from left to right, from top to bottom, or with zooming effect.

To improve quality of video shooting, various camera movement techniques have been developed in the industry. Common camera movement techniques may include a push shot, a pull shot, a tracking shot, a pan shot, a tilt shot, a follow shot, and the like. Effect of different camera movement techniques in a video is represented as zooming of a picture, a photographed subject approaching or receding, panning or swiveling, and the like, thereby enhancing atmosphere and emotion of the video.

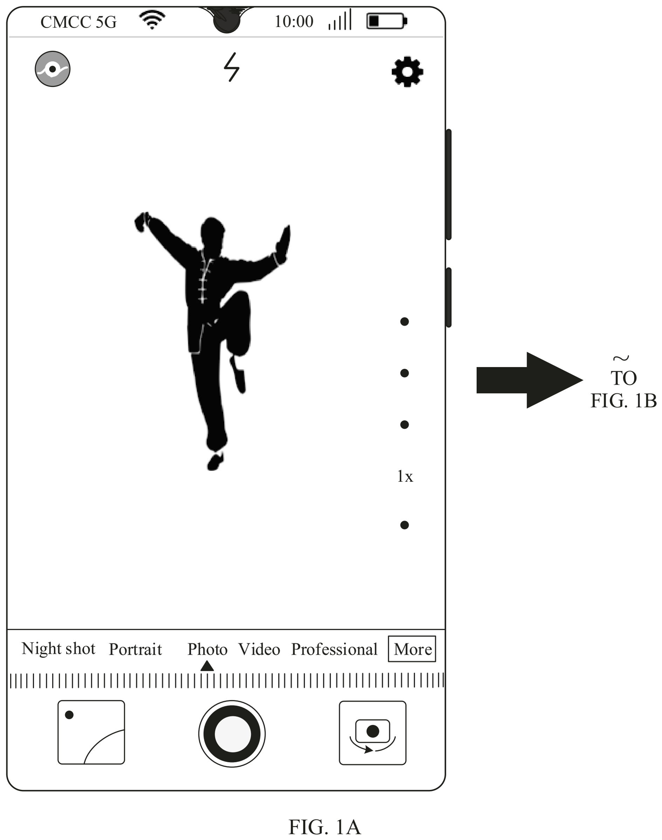

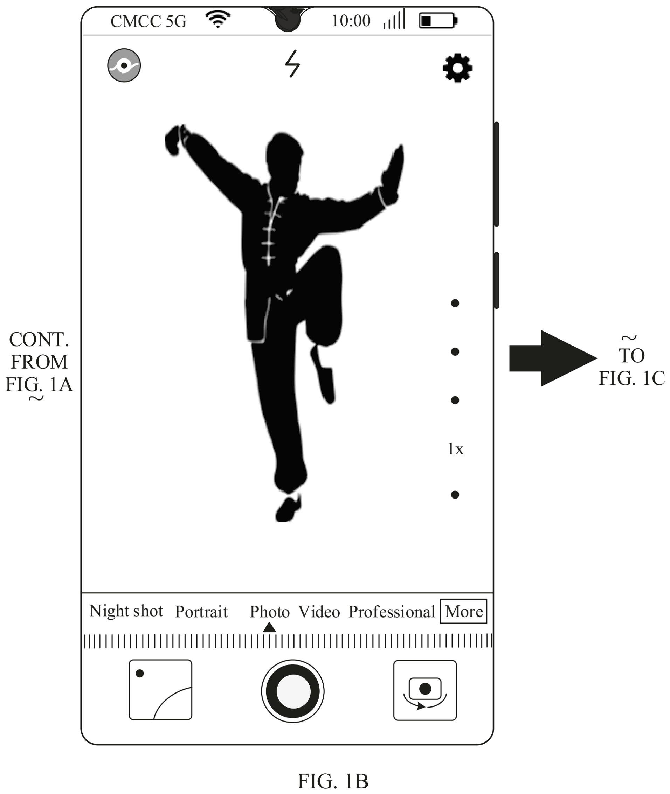

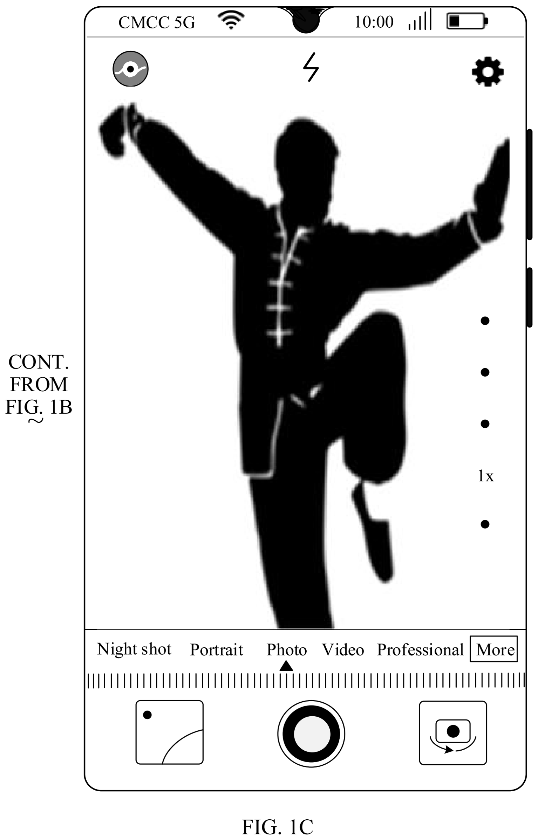

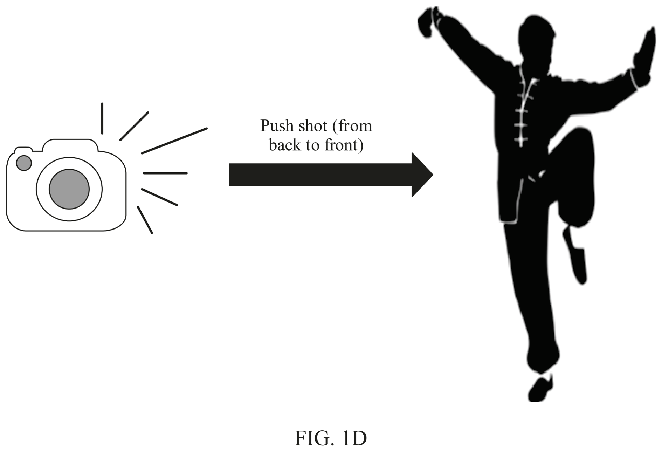

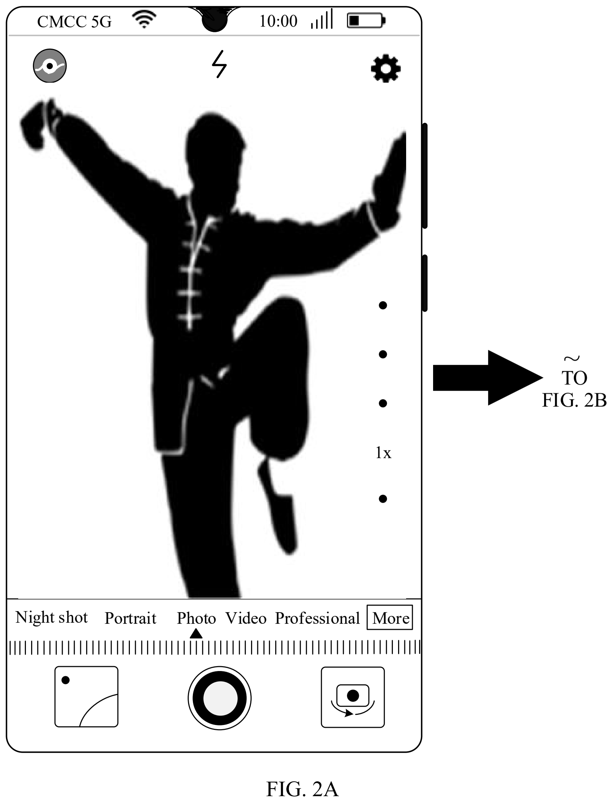

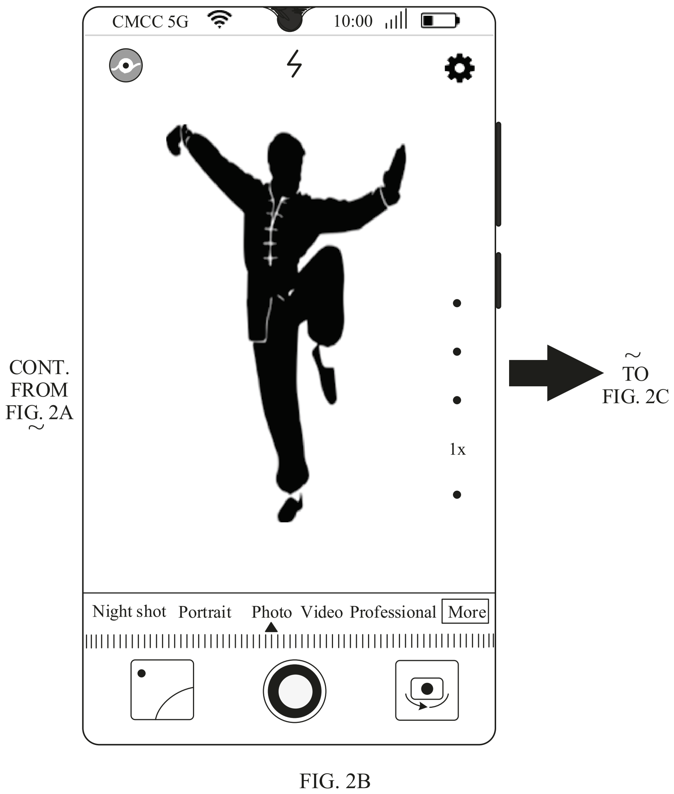

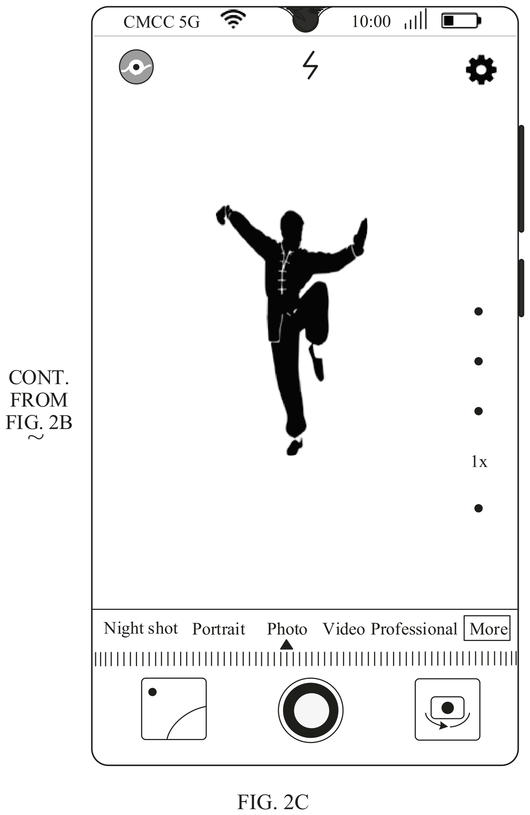

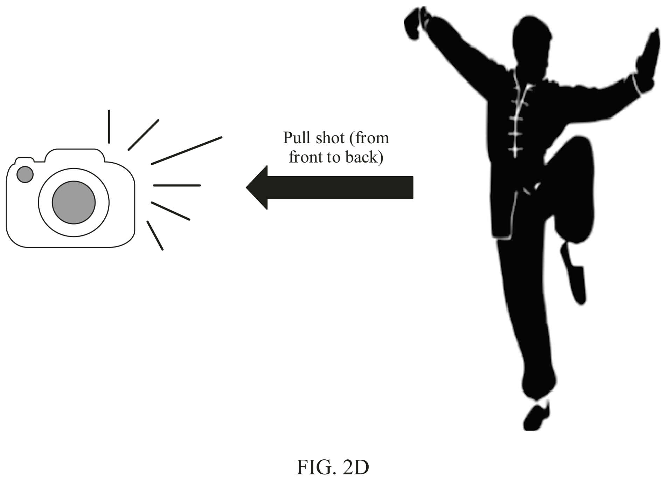

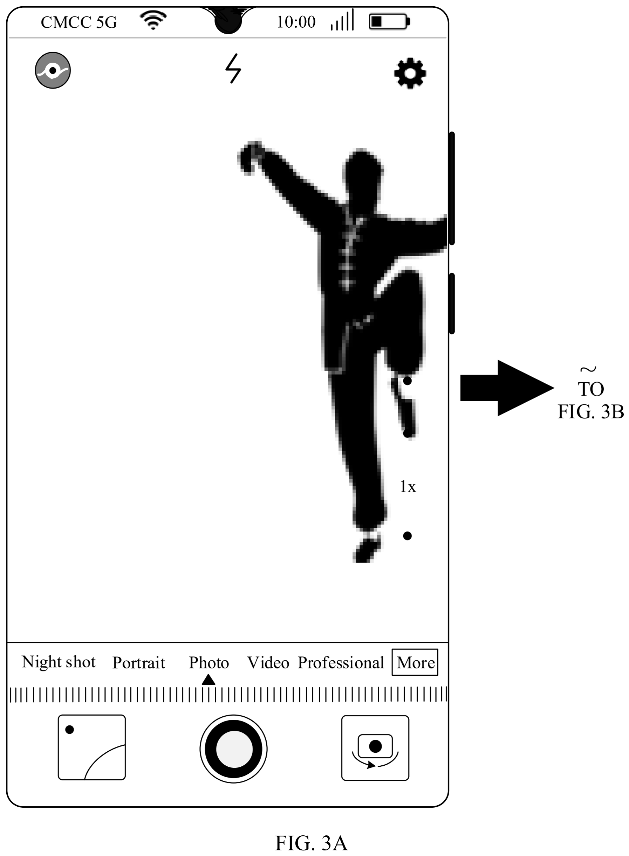

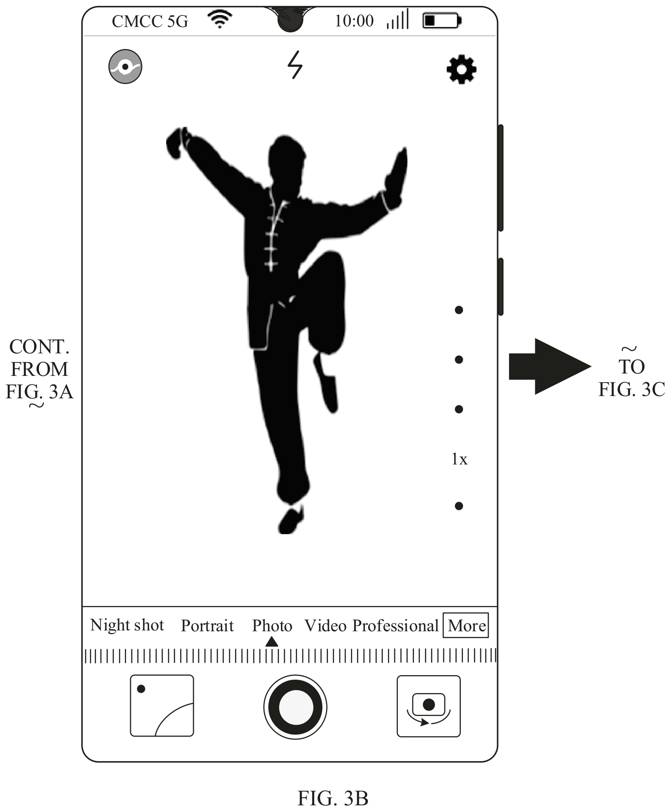

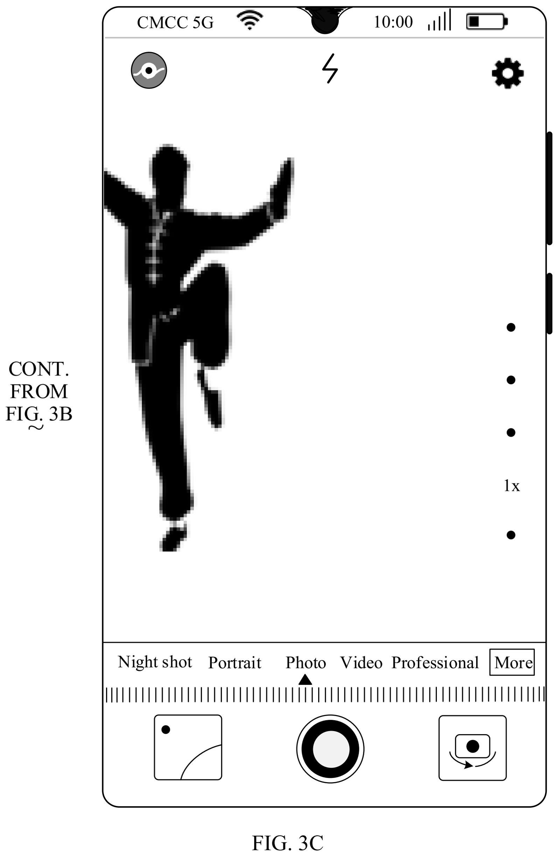

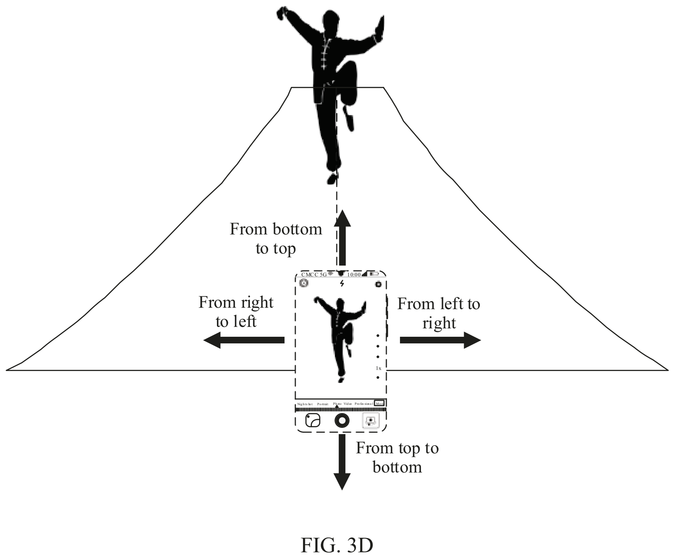

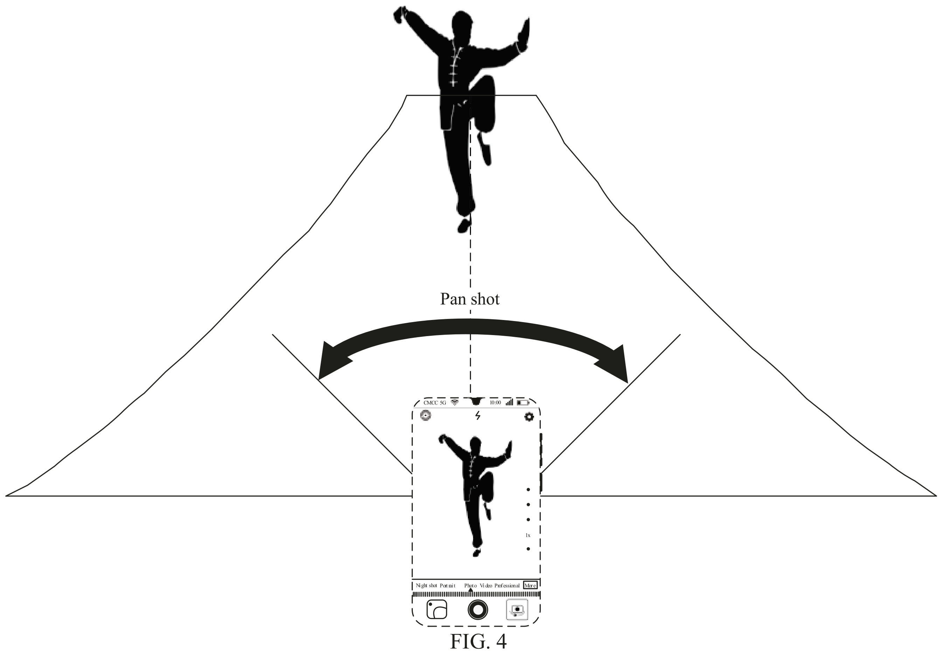

For ease of understanding of the technical solutions of this application, the following first describes each type (technique) of camera movement in embodiments of this application with reference to the accompanying drawings. FIG. 1A to FIG. 1D are a diagram of a push shot, FIG. 2A to FIG. 2D are a diagram of a pull shot, FIG. 3A to FIG. 3D are a diagram of a tracking shot, and FIG. 4 is a diagram of a pan shot.

The push shot is a shot in which a camera pushes forward slowly or rapidly while a position of a photographed subject remains unchanged. A shot size also changes from a long shot to a full shot, a medium shot, a close shot, or even a close-up. It may be considered that an angle of view (field of view, FOV) of such a shot gradually decreases, or a focal length gradually increases. A main function of such a shot is to highlight the subject, gradually focus the audience's visual attention, enhance visual perception, and create a state of scrutiny. For example, during shooting of a person, as the camera pushes forward, a proportion of the person in an image gradually increases, making the person more prominent.

FIG. 1A to FIG. 1D show a martial artist practicing Tai Chi, and the martial artist is a photographed subject (object). From relative sizes of the martial artist in different mobile phone images of FIG. 1A to FIG. 1D, it can be seen that in a process of pushing the camera from back to front, an area occupied by the martial artist in an entire image gradually increases. That is, a shot size sequentially transitions from a long shot to a medium shot and then to a close shot. In this case, this group of shots may be considered as a push shot.

The pull shot is opposite to the push shot in terms of movement direction. The camera moves backward away from the subject from near to far, with a framing range expanding, the photographed subject diminishing in size, and a distance from the audience gradually increasing. Visual elements in the image change from few to many, shifting from partial to overall. A shot size pulls from a close-up, a close shot, or a medium shot to a full shot or a long shot. It may be considered that an FOV of such a shot gradually increases, or a focal length gradually decreases. A main function of the pull shot is to reveal an environment in which the person is situated, thereby enhancing atmosphere of the image.

FIG. 2A to FIG. 2D show a martial artist practicing Tai Chi, and the martial artist is a photographed subject. From relative sizes of the martial artist in different mobile phone images of FIG. 2A to FIG. 2D, it can be seen that in a process of gradually pulling the camera from front to back, an area occupied by the martial artist in an entire image gradually decreases. That is, a shot size sequentially transitions from a close shot to a medium shot and then to a long shot. In this case, this group of shots may be considered as a pull shot.

The tracking shot is similar to the push shot and the pull shot, except that a movement trajectory differs. The push shot and pull shot refer to forward and backward camera movement, while the tracking shot refers to unidirectional movement of the camera along a fixed trajectory. "Tracking" may be understood as a parallel movement, and a movement direction may be a horizontal direction, or may be a vertical direction, or may be tilted at a specific angle (that is, both the horizontal direction and the vertical direction are included). A movement trajectory is usually linear.

A horizontal movement of the camera can expand a horizontal field of view. The camera moves horizontally from left to right along the horizontal direction for shooting, which is similar to a state in which people look around while walking. For example, a horizontal movement may be used to shoot a vast natural landscape. A vertical movement of the camera can expand a vertical field of view. For example, the vertical movement may be used to shoot a towering subject such as a building or a mountain peak.

As shown in FIG. 3A to FIG. 3D, for the tracking shot, a camera movement direction may include a left-to-right direction, a right-to-left direction, a bottom-to-top direction, and a top-to-bottom direction, or include a combination of two of the foregoing four directions. The left-to-right direction is used as an example. In a process of the camera gradually moving from left to right, the martial artist moves leftward relative to an entire mobile phone image, and a size of the martial artist in the entire image does not change. If there is another object, a position of the martial artist relative to the another object also remains unchanged.

The pan shot is similar to the tracking shot. However, during shooting, the pan shot refers to swiveling a mobile phone or a camera from a fixed position, with the camera moving in an arc. For example, with a user standing still and holding the mobile phone, the camera shoots from left to right, and a movement trajectory of the mobile phone is an arc. A key point is to remain stationary. "Panning" gradually reveals scenes in front of the camera, making images more immersive. The pan shot is suitable for shooting continuous actions or extremely large scenes, resembling a way human eyes survey a photographed subject along a specific direction. The pan shot can represent eyes of a person, observing everything around. The pan shot has a unique function in depicting space and describing an environment. Left-and-right panning is usually used to present large-scale scenes, while up-and-down panning is usually used to showcase magnificence and steepness of towering objects.

As shown in FIG. 4, for the pan shot, a panning direction of the camera may include a left-to-right direction, a right-to-left direction, a bottom-to-top direction, and a top-to-bottom direction, and include a combination of two of the foregoing four directions. The left-to-right direction is used as an example. In a process of the camera gradually panning from left to right, the martial artist moves leftward relative to an entire mobile phone image, and a position and a size of the martial artist relative to another object in the entire image change.

The push shot, the pull shot, the tracking shot, and the pan shot are basic types of camera movement. During actual application, a camera movement may include a combination of the foregoing movements. That is, a camera movement may include several of the foregoing four types. For example, the camera movement may include both the push shot and the tracking shot, or include both the pull shot and the tracking shot, or include both the tracking shot and the pan shot, or include the pull (push) shot, the tracking shot, and the tilt shot, so that a captured video can have better display effect.

Table 1 shows camera movement directions corresponding to different types of camera movement. The movement herein includes translation and swiveling. As shown in Table 1, in embodiments of this application, a movement (translation) direction of the push shot may be understood as that the camera gradually approaches a plane in a direction perpendicular to the plane, that is, from back to front. A movement (translation) direction of the pull shot may be understood as that the camera gradually moves away from a plane in a direction perpendicular to the plane, that is, from front to back. A movement (translation) direction of the tracking shot may be understood as that the camera moves horizontally, vertically, or diagonally within a surface parallel to a plane. That is, the movement direction of the tracking shot includes a left-to-right direction, a right-to-left direction, a bottom-to-top direction, a top-to-bottom direction, and a combination of two of the foregoing four directions. A movement (panning) direction of the pan shot may be understood as that the camera swivels horizontally, vertically, or diagonally around a fixed point located away from a plane. That is, the panning direction of the pan shot includes a left-to-right direction, a right-to-left direction, a bottom-to-top direction, a top-to-bottom direction, and a combination of two of the foregoing four directions.

**Table 1: Camera movement directions corresponding to different types of camera movement**

| **Type of camera movement** | **Movement direction** |
|---|---|
| Push shot | From back to front |
| Pull shot | From front to back |
| Tracking shot | From left to right |
| | From right to left |
| | From bottom to top |
| | From top to bottom |
| Pan shot | From left to right |
| | From right to left |
| | From bottom to top |
| | From top to bottom |

At present, when a terminal device generates an animation with camera movement display effect based on an image, the terminal device may process the image in the animation based on a preset camera movement direction. For example, if the preset camera movement direction is from left to right, the image is displayed in the generated animation in accordance with the camera movement direction from left to right. For another example, if the preset camera movement direction is from top right to bottom left, the image is displayed in the generated animation in accordance with the camera movement direction from top right to bottom left. However, a plurality of images are usually added to the animation, and content displayed in different images varies, which may even vary greatly. In a conventional technology, the plurality of images can be displayed only in a fixed and unique camera movement direction, which is not flexible enough in the use of camera movements, resulting in poor display effect of the animation.

In view of this, an embodiment of this application provides a generation method for an animation. The animation may be, for example, a video or a GIF image. According to the generation method, a camera movement direction (denoted as a first camera movement direction) may be first determined based on display content of an image (denoted as a first image), and then the animation is generated based on the first camera movement direction and the first image. That is, the first image is displayed based on the first camera movement direction, thereby generating the animation. Because the camera movement direction is determined based on the display content of the image, the camera movement direction can be associated and matched with the display content of the image, and camera movements can be flexibly utilized based on the image content, so that a sense of image and immersion of the animation is enhanced and a high-quality animation with harmonious camera movements can be generated, thereby improving display effect of the animation.

Further, in embodiments of this application, a preset algorithm (for example, an artificial intelligence (artificial intelligence, AI) model) may be used to perform content understanding of the display content of the first image, to recognize at least one piece of pointing information (denoted as a first pointing direction) in the image. The first pointing direction may be, for example, a face orientation, a gaze direction, or a movement direction of a photographed subject (for example, a person or an animal), or may be an extension direction of a path, a river, or the like. The first pointing direction may include, for example, at least one of front-to-back, back-to-front, left-to-right, right-to-left, top-to-bottom, and bottom-to-top.

Then, the camera movement direction (that is, the first camera movement direction) is determined based on the first pointing direction. For example, a direction along (following) the first pointing direction may be determined as the first camera movement direction, or a direction opposite to (against) the first pointing direction may be determined as the first camera movement direction, but this is not limited thereto. In this way, the animation may be generated based on the first camera movement direction and the first image. Because a degree of matching between the camera movement direction and the image content is higher and use of camera movements is more harmonious and smoother, the generated animation has higher quality and a stronger sense of image. This improves display effect of the animation, thereby providing the user with coherent immersive experience, and improving visual experience of the user.

The generation method for an animation provided in embodiments of this application may be applied to an electronic device, or may be an independent app. The app may implement the generation method for an animation in this application. For example, the generation method may be applied to an electronic device such as a mobile phone, a tablet computer, a camera, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

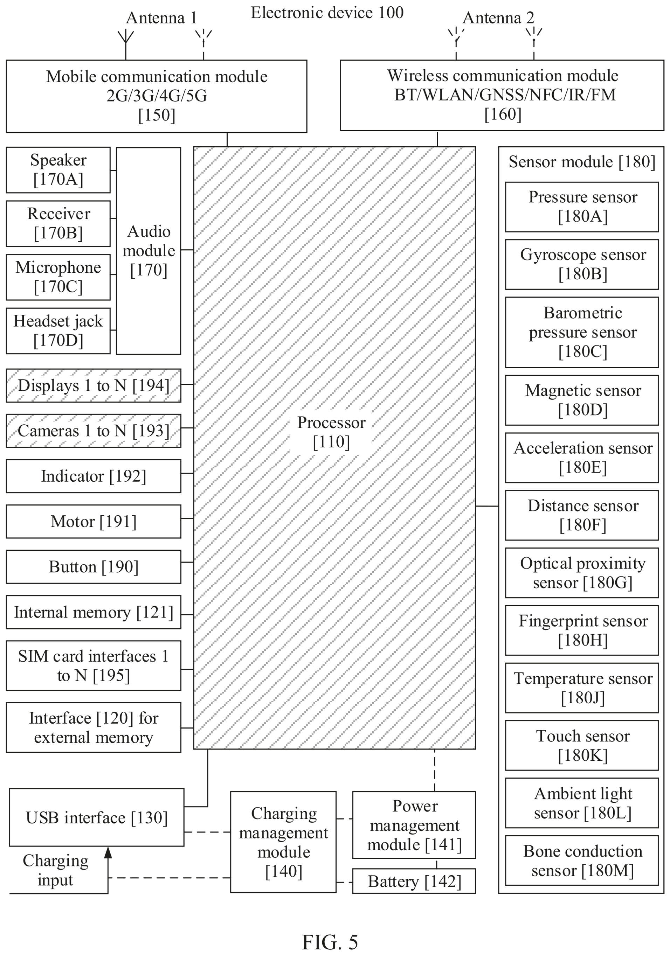

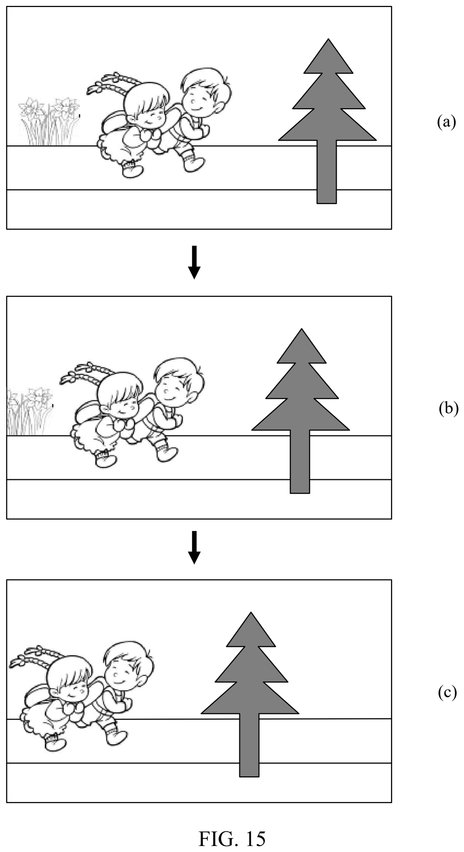

For example, FIG. 5 is a diagram of a structure of an electronic device 100 according to an embodiment of this application. As shown in FIG. 5, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving efficiency of a system.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be configured to perform audio communication. The PCM interface may also be used to perform audio communication, and sample, quantize, and code an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. The GPIO interface may be configured by software, and the GPIO interface may be configured as a control signal or a data signal. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (leakage of electricity and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP may be configured to process data fed back by the camera 193. The camera 193 is configured to capture a static image or a video. The digital signal processor is configured to process a digital signal, and may process another digital signal in addition to the digital image signal. The video codec is configured to compress or decompress a digital video.

The NPU is a neural-network (neural-network, NN) computing processor, quickly processes input information with reference to a structure of a biological neural network, for example, a mode of transfer between human brain neurons, and may further continuously perform self learning. Applications such as intelligent cognition of the electronic device 100 may be implemented through the NPU, for example, image recognition, facial recognition, speech recognition, and text understanding.

The internal memory 121 may be configured to store computer-executable program code. The executable program code includes instructions. The processor 110 executes various functional applications and data processing of the electronic device 100 by running the instructions stored in the internal memory 121. The internal memory 121 may include a program storage area and a data storage area. The program storage area may store an operating system, an application required by at least one function (such as a sound playing function or an image playing function), and the like. The data storage area may store data (for example, audio data or a phone book) and the like created when the electronic device 100 is used. In addition, the internal memory 121 may include a high-speed random access memory, or may include a non-volatile memory, for example, at least one magnetic disk storage device, a flash memory, or a universal flash storage (universal flash storage, UFS).

The interface 120 for external memory may be configured to connect to an external memory, for example, a micro SD card, to extend a storage capability of the electronic device 100. The external memory card communicates with the processor 110 through the interface 120 for external memory, to implement a data storage function. For example, files such as music and videos are stored in the external memory card.

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to user setting and function control of the electronic device 100. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like.

A software system of the electronic device 100 may use a layered architecture, an event-driven architecture, a microkernel architecture, a micro service architecture, or a cloud architecture. In embodiments of this application, an Android (Android) system of a layered architecture is used as an example to describe a software structure of the electronic device 100.

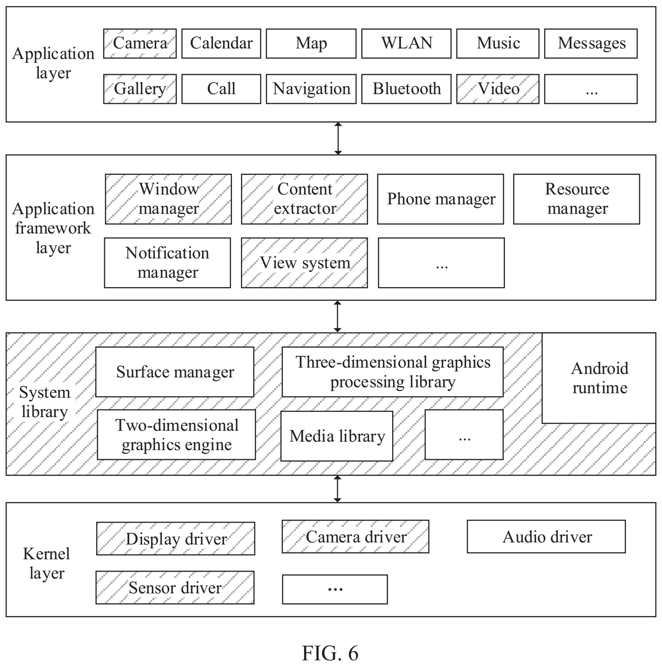

FIG. 6 is a block diagram of the software structure of the electronic device 100 according to an embodiment of this application.

As shown in FIG. 6, the software system using the layered architecture is divided into several layers, and each layer has a clear role and task. The layers communicate with each other through a software interface. In some embodiments, the software system may be divided into four layers: an application layer, an application framework layer, an Android runtime (Android Runtime) and system library, and a kernel layer from top to bottom.

The application layer may include applications such as Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer may include some predefined functions.

For example, the application framework layer includes a window manager, a content provider, a view system, a phone manager, a resource manager, a notification manager, and the like.

The window manager is configured to manage a window program. The window manager may obtain a size of a display, and determine whether there is a status bar, a screen is locked, and a screenshot is taken.

The content provider is configured to: store and obtain data, and enable the data to be accessed by an application. The data may include a video, an image, audio, calls that are made and answered, a browsing history and bookmarks, and a phone book.

The view system includes visual controls such as a control for displaying text and a control for displaying an image. The view system may be used to construct an application. A display interface may include one or more views. For example, a display interface including an SMS message notification icon may include a text display view and an image display view.

The phone manager is used to provide a communication function of the electronic device 100, for example, management of a call status (answering or declining).

The resource manager provides an application with various resources, such as a localized person string, an icon, an image, a layout file, and a video file.

The notification manager enables an application to display notification information in a status bar, and may be used to convey a notification-type message. The displayed notification information may automatically disappear after a short pause without user interaction. For example, the notification manager is used for download completion notification and message notification. The notification manager may further manage a notification that appears in the status bar at the top of the system in a form of a graph or scroll bar text, for example, a notification of an application running in background. The notification manager may further manage a notification that appears on the screen in a form of a dialog window. For example, text information is prompted in the status bar, an alert tone is made, the electronic device vibrates, and an indicator blinks.

The Android runtime includes a core library and a virtual machine. The Android runtime is responsible for scheduling and management of the Android system.

The core library includes two parts: a performance function that needs to be called in a Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), and a three-dimensional graphics processing library (for example, an open graphics library for embedded systems (open graphics library for embedded systems, OpenGL ES), and a 2D graphics engine (for example, a skia graphics library (skia graphics library, SGL))).

The surface manager is configured to manage a display subsystem and provide fusion of a 2D layer and a 3D layer for a plurality of applications.

The media library supports playback and recording of a plurality of audio formats, playback of a plurality of video formats, and static image files. The media library may support a plurality of audio and video coding formats, for example, MPEG-4, H.264, moving picture experts group audio layer III (moving image experts group audio layer III, MP3), advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library may be configured to implement three-dimensional graphics drawing, image rendering, synthesis, and layer processing.

The two-dimensional graphics engine is a drawing engine for 2D drawing.

The kernel layer is a layer between hardware and software. The kernel layer may include driver modules such as a display driver, a camera driver, an audio driver, and a sensor driver.

In this embodiment of this application, the user starts a camera application. The camera application at the application layer in FIG. 6 enables a shooting function, and sends an instruction to the kernel layer, to invoke a camera driver, a sensor driver, and a display driver at the kernel layer, so that the electronic device 100 can enable the camera to capture an image. In a process of capturing an image by the camera, light is transmitted through the camera to an image sensor, and the image sensor performs optical-to-electrical conversion on an optical signal, to convert the optical signal into an image visible to naked eyes of the user. Output image data is transferred to the system library in FIG. 6 in a form of a data stream. The three-dimensional graphics processing library and the image processing library implement drawing, image rendering, composition, layer processing, and the like, to generate a display layer. The surface manager performs fusion processing on the display layer, and transfers the display layer to a content provider, a window manager, and a view system of the application framework layer, to control display of the display interface. Finally, the image is displayed on an image preview area of the camera application or on a display of the electronic device 100.

Further, when the user is satisfied with one or more captured photos, the photo may be used to generate an animation, for example, generate a video or a dynamic GIF image. The image processing library obtains the photo and performs content understanding, to determine a camera movement direction, and then displays the photo based on the movement direction, to generate an animation.

The surface manager obtains and processes data of the animation. Specifically, the surface manager may further provide a layer (layer) composition service. A three-dimensional graphics processing library, a two-dimensional graphics engine, and the like may draw and render a composed layer. After rendering is completed, the layer is sent to the display for display. For a playback window (for example, a video playback window) displayed on the display, a process of data refreshing, layer composition, drawing and rendering, and display may be performed based on the animation data, to keep display content of the playback window updated in real time.

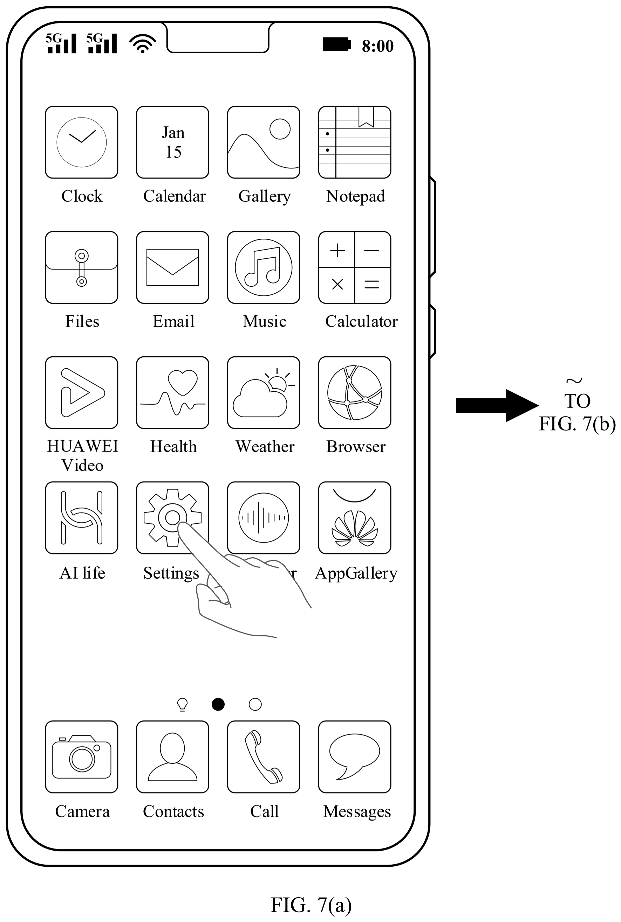

An electronic device (specifically, a mobile phone) having structures shown in FIG. 5 and FIG. 6 is used as an example. The following continues to describe, with reference to a specific application scenario, a generation method for an animation provided in an embodiment of this application. FIG. 7(a) to FIG. 7(f) are a diagram of human-computer interaction in an application scenario according to an embodiment of this application. As shown in FIG. 7(a) to FIG. 7(f), in a possible application scenario, a user may generate an animation by using a static image (that is, a first image), and use the animation as a desktop wallpaper and/or a lock screen wallpaper.

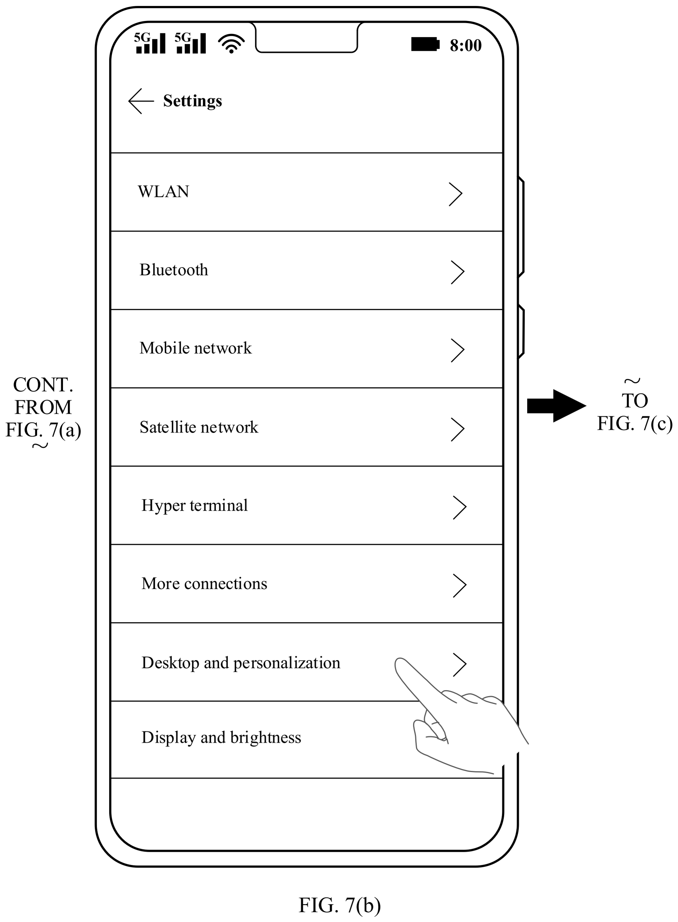

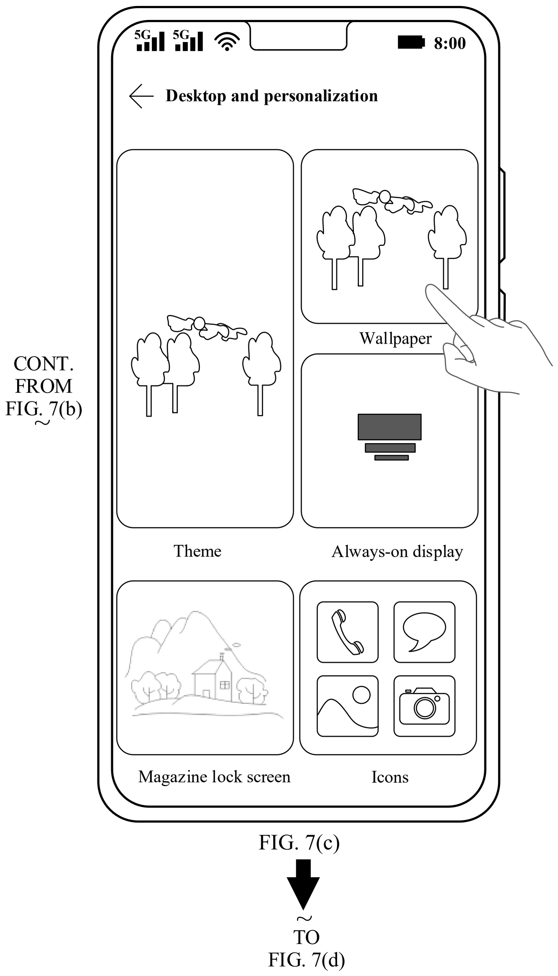

Specifically, as shown in FIG. 7(a), the user may tap or touch a "Settings" key on a mobile phone desktop to access a settings page. The settings page shown in FIG. 7(b) includes options such as WLAN, Bluetooth, Mobile network, Satellite network, Hyper terminal, More connections, Desktop and personalization, and Display and brightness. The user taps the "Desktop and personalization" option. Further, a page of Desktop and personalization shown in FIG. 7(c) include options such as Theme, Wallpaper, Always-on display, Magazine lock screen, and Icons. The user taps the "Wallpaper" option to access a wallpaper settings page.

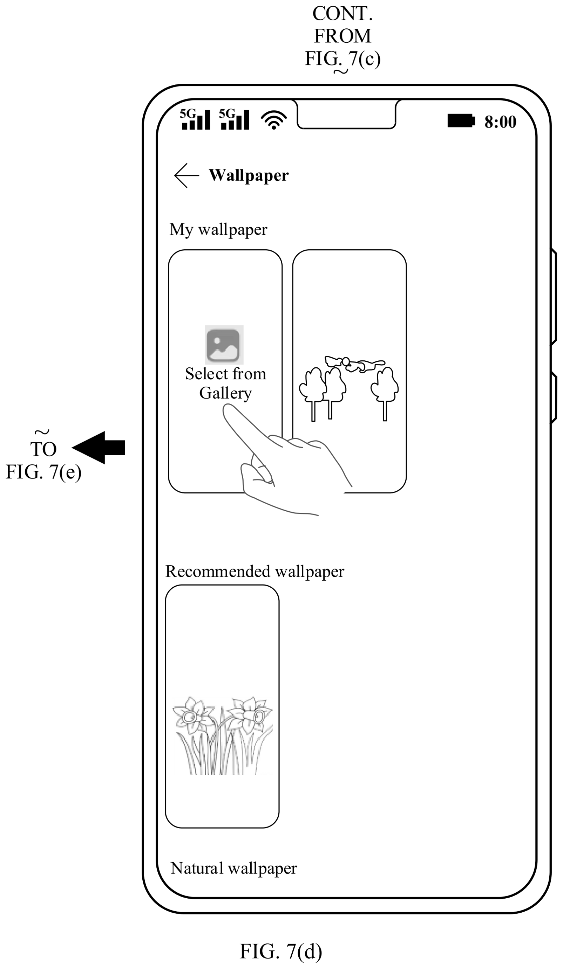

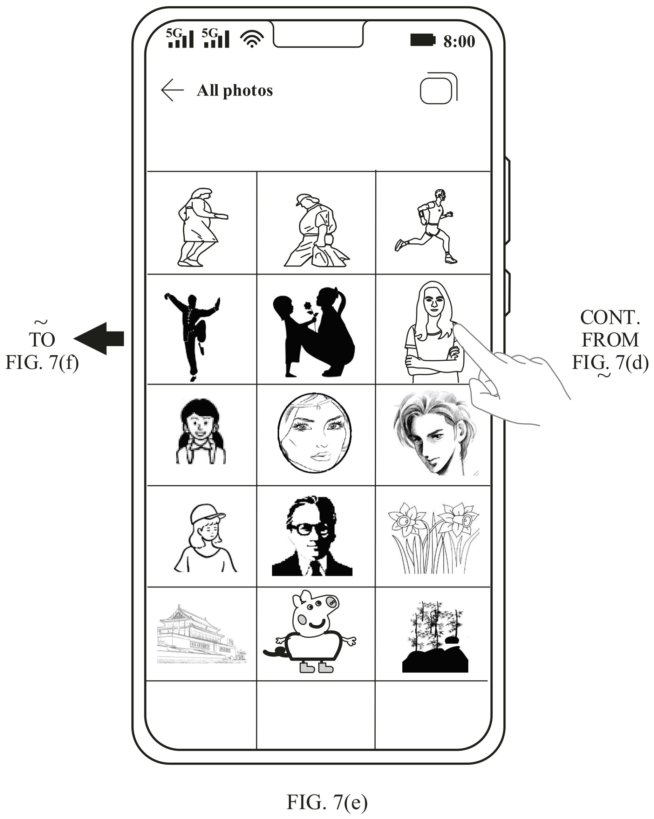

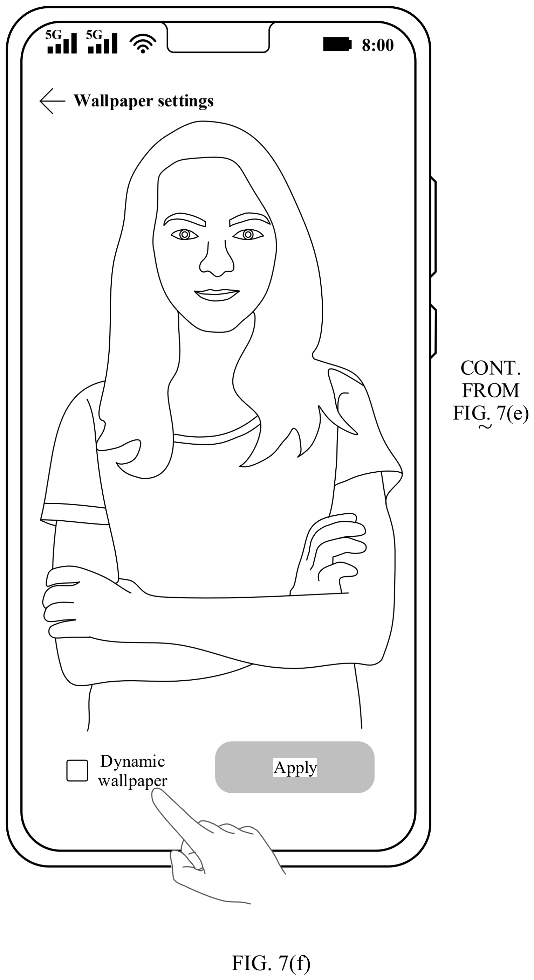

The wallpaper page shown in FIG. 7(d) includes options such as My wallpaper, Recommended wallpaper, and Natural wallpaper. The user taps an option "Select from Gallery" in My wallpaper to access a gallery page. In a page of all photos shown in FIG. 7(e), the user selects a preferred photo to use as a wallpaper. The user may tap a selected photo to access the wallpaper settings page. On the wallpaper settings page shown in FIG. 7(f), the mobile phone may convert, under an operation of the user, a 2D static photo selected in a previous step into a 3D animation, and further set the animation as a desktop wallpaper and/or a lock screen wallpaper for use.

Specifically, as shown in FIG. 7(f), the photo selected in the previous step is displayed on the wallpaper settings page, and the user may choose to set the photo as a common static wallpaper, or may choose to set the photo as a dynamic wallpaper. When determining that the photo needs to be used as a dynamic wallpaper, the user may select a "Dynamic wallpaper" option on the page, and then tap an "Apply" key. In response to a tapping operation of the user, the mobile phone converts the photo into an animation according to the generation method for an animation provided in this embodiment of this application, and then displays and applies the animation. For example, after the user taps the "Apply" key, the photo is automatically converted into an animation, and a new page (not shown in the figure) is displayed. On the new page, the user may choose to set the generated animation as a dynamic wallpaper of the desktop, or set the generated animation as a dynamic wallpaper of the lock screen, or set the generated animation as a dynamic wallpaper of both the desktop and the lock screen.

The mobile phone in FIG. 7(a) to FIG. 7(f) may set the selected static image as an animation according to the following logic.

The mobile phone obtains an image selected by the user, where the image may be, for example, an image of a lady. The mobile phone performs content understanding on the image by using a preset deep neural network model, and determines that a face orientation or a gaze direction of the lady is from front to back (that is, a direction from inside a plane to outside the plane, or a direction from inside a screen to outside the screen). Then, according to preset logic, a direction opposite to the face orientation-from back to front (that is, a direction from outside the plane to inside the plane, or a direction of the user looking toward the screen) is determined as a camera movement direction. The camera movement direction is a movement direction of the push shot. Therefore, the push shot may be applied to the image, that is, with the camera moving from back to front to display the image, thereby generating an animation.

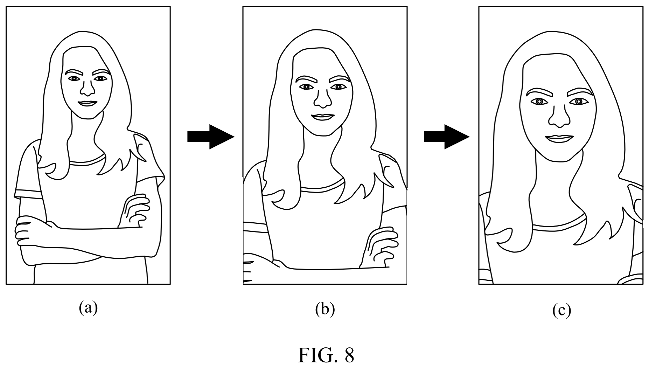

FIG. 8 is a diagram of a playing process of an animation generated in a scenario shown in FIG. 7(a) to FIG. 7(f). FIG. 8 shows three frames of images of the animation. From comparison of the three frames of images shown in (a), (b), and (c) of FIG. 8, it can be seen that, as time progresses, the camera gradually moves closer to the lady in the image, and a proportion of the image occupied by the lady gradually increases. A shot size transitions sequentially from a long shot to a medium shot, a close shot, or even a close-up.

According to embodiments shown in FIG. 7(a) to FIG. 7(f), and FIG. 8, because the camera movement direction is determined based on a face orientation or a gaze direction of a person in the image, use of camera movements is more harmonious and smoother, and the camera movements can be flexibly used based on the image content, so that a sense of image and immersion of the animation is enhanced and a high-quality animation with harmonious camera movements can be generated, thereby improving display effect of the animation and further improving user experience.

It should be noted that, in embodiments shown in FIG. 7(a) to FIG. 7(f), and FIG. 8, the dynamic wallpaper is generated by using only one image. In another implementation, the dynamic wallpaper may alternatively be generated by using a plurality of images. In this case, for each image, the camera movement direction is determined according to the foregoing logic, and a corresponding animation segment is generated based on the image and a camera movement direction corresponding to the image. A plurality of images correspond to a plurality of animation segments. A complete animation may be obtained by splicing the plurality of animation segments. That is, a dynamic wallpaper generated by the plurality of images is obtained. It is easy to understand that camera movement directions used for (corresponding to) different images may vary. As a result, use of camera movements are more flexibly in this application, and a matching degree between the camera movement direction in the animation and the image is higher, thereby enhancing display effect of the animation.

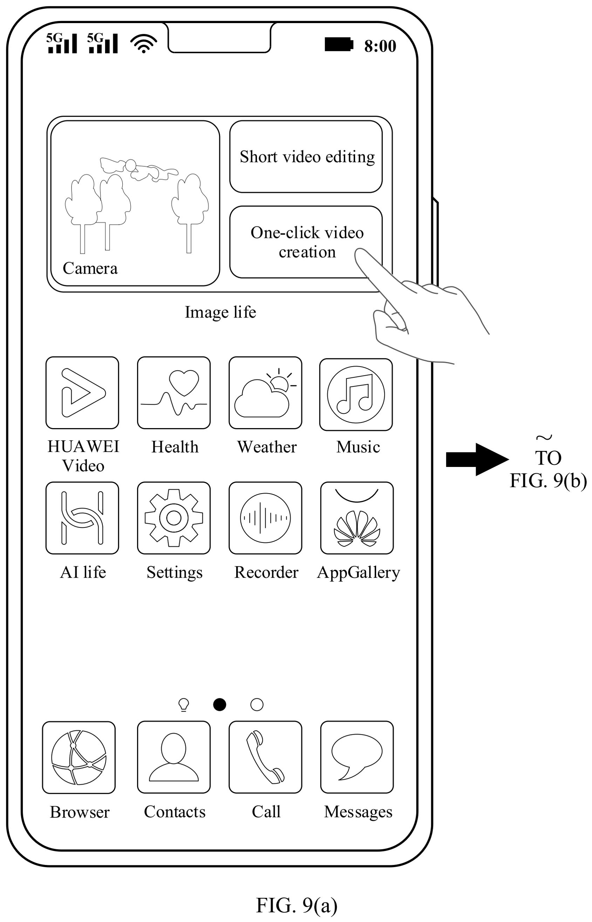

FIG. 9(a) to FIG. 9(c) are a diagram of human-computer interaction in another application scenario according to an embodiment of this application. As shown in FIG. 9(a) to FIG. 9(c), in another possible application scenario, the user may generate an animation by using a static image, and share the animation on a social platform or send the animation to relatives and friends for watching. The animation may be, for example, a video or a dynamic GIF image, but this is not limited thereto.

As shown in FIG. 9(a), when the user is satisfied with a plurality of images captured by the camera and/or obtained from the internet, an animation may be generated based on the plurality of images. In this case, the user may tap a one-click video creation key or a short video editing key on the desktop. This specification uses tapping the one-click video creation key as an example for description. When the user taps the one-click video creation key, a local gallery page is accessed.

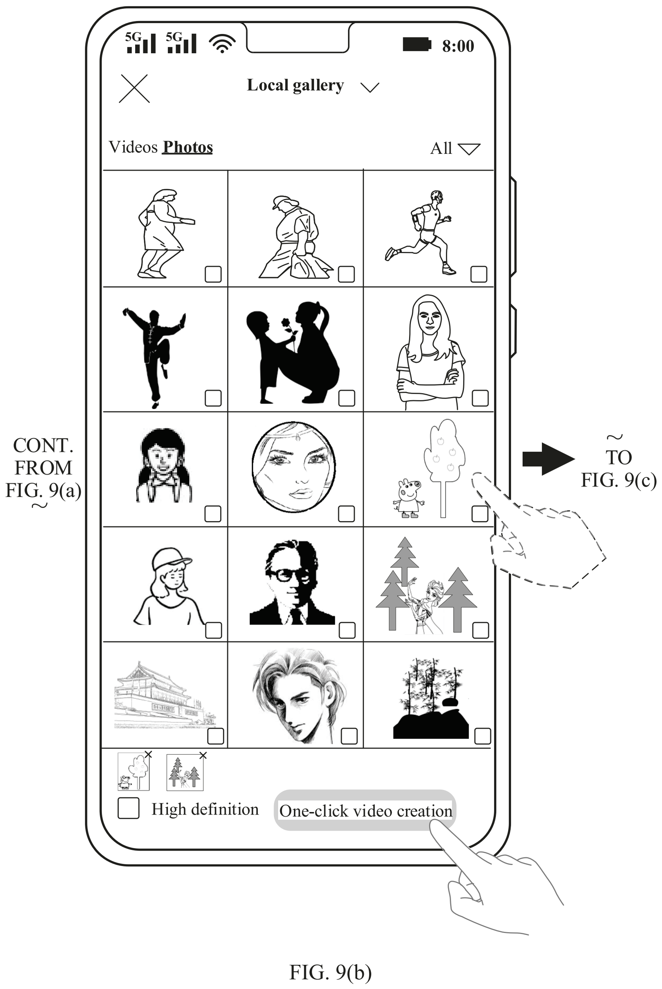

As shown in FIG. 9(b), the user first selects a plurality of images on the local gallery page, and then taps the one-click video creation key. In response to the foregoing tapping operation, the mobile phone generates an animation based on the plurality of images selected by the user.

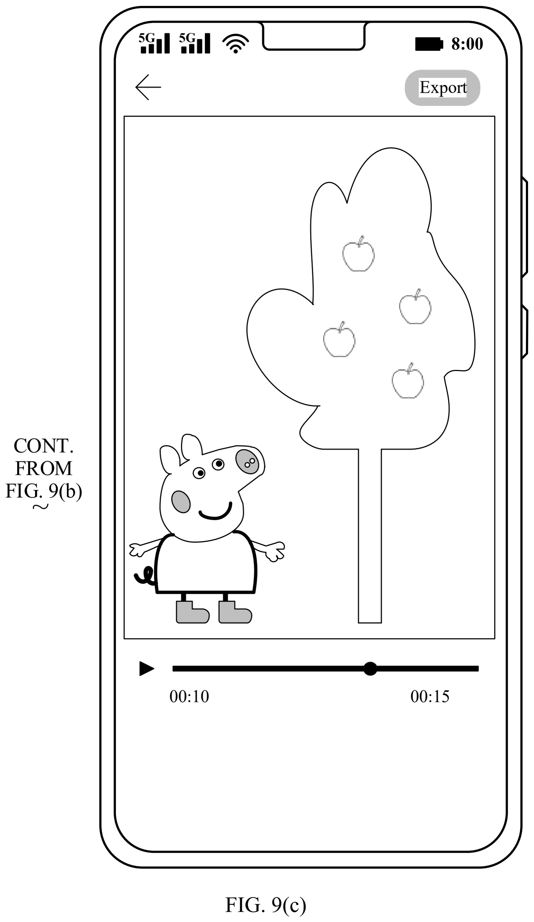

As shown in FIG. 9(c), after the animation is generated, an animation playing page is automatically displayed, and the animation is automatically played. The user watches the animation. If the user is satisfied with animation effect, the user may tap an export key to export and save the animation locally. The user may further share the animation to a social platform such as Weibo or Moments, or send the animation to relatives and friends via instant messaging software for watching.

The mobile phone in FIG. 9(a) to FIG. 9(c) may set the selected static image as an animation according to the following logic.

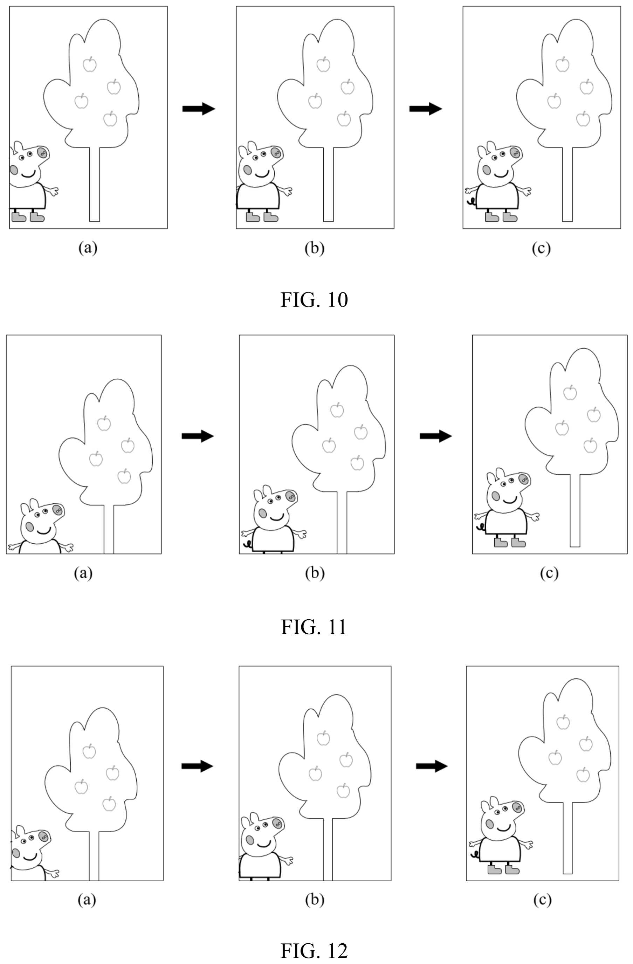

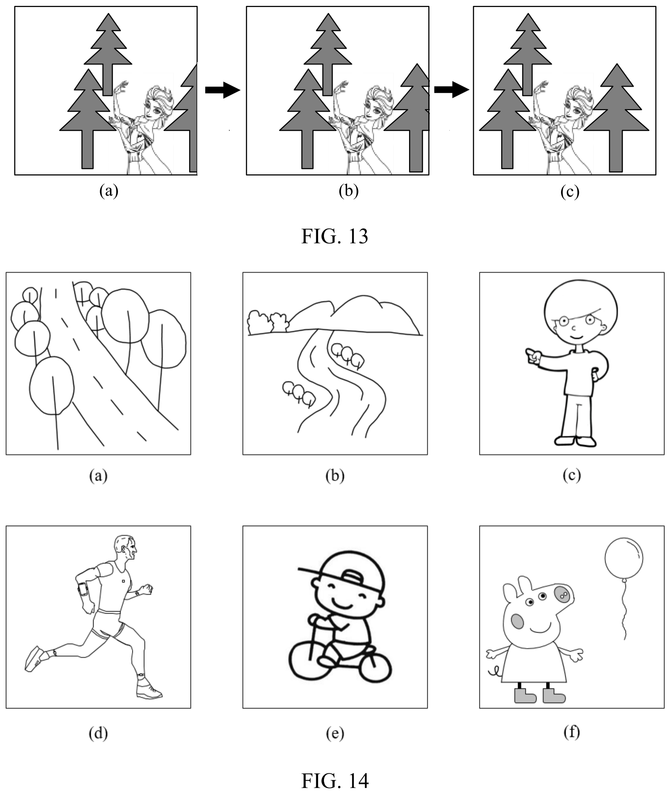

The mobile phone obtains two images selected by the user. For example, the two images are respectively a first image shown in FIG. 10 and a second image shown in FIG. 13. The first image includes an animal doll, while the second image includes a dancer in a forest.

The mobile phone first performs content understanding on the first image by using a preset deep neural network model, and determines that a gaze direction of the animal doll is toward a top-right direction (looking at an apple on a tree). Then, according to preset logic, a direction opposite to the gaze direction-from right to left, is determined as the camera movement direction. The camera movement direction may be a movement direction of a tracking shot or a pan shot. Therefore, a tracking shot and/or the pan shot may be applied to the image, that is, with the camera moving and/or panning from right to left to display the first image, thereby generating an animation segment corresponding to the first image.

FIG. 10 is a diagram of an example of a playing process of the first image. FIG. 10 shows three frames of images of an animation segment corresponding to the first image. A tracking shot and/or a pan shot are/is applied to the first image. From comparison of the three frames of images shown in (a), (b), and (c) of FIG. 10, it can be seen that, as time progresses, the camera gradually moves and/or pans from right to left, while the animal doll gradually moves from left to right within the image.

Optionally, if the gaze direction of the animal doll is toward a top-right direction, a direction opposite to the gaze direction-a direction from top to bottom, may alternatively be determined as the camera movement direction according to preset logic. The tracking shot and/or the pan shot may be applied to the first image, that is, with the camera moving and/or panning from top to bottom to display the first image, thereby generating an animation segment corresponding to the first image.

FIG. 11 is a diagram of another example of a playing process of the first image. FIG. 11 shows three frames of images of an animation segment corresponding to the first image. A tracking shot and/or a pan shot are/is applied to the first image. From comparison of the three frames of images shown in (a), (b), and (c) of FIG. 11, it can be seen that, as time progresses, the camera gradually moves and/or pans from top to bottom, while the animal doll gradually moves from bottom to top within the image.

Optionally, if the gaze direction of the animal doll is a direction from bottom left to top right, a direction opposite to the gaze direction-from top right to bottom left, may alternatively be determined as the camera movement direction according to preset logic. The tracking shot and/or the pan shot may be applied to the first image, that is, with the camera moving and/or panning from top right to bottom left to display the first image, thereby generating an animation segment corresponding to the first image.

FIG. 12 is a diagram of still another example of a playing process of the first image. FIG. 12 shows three frames of images of an animation segment corresponding to the first image. A tracking shot and/or a pan shot are/is applied to the first image. From comparison of the three frames of images shown in (a), (b), and (c) of FIG. 12, it can be seen that, as time progresses, the camera gradually moves and/or pans from top right to bottom left, while the animal doll gradually moves from bottom left to top right within the image.

In other words, for the gaze direction from bottom left to top right, the direction opposite to (against) the gaze direction may include right-to-left, top-to-bottom, or top-right-to-bottom-left (that is, a combination of the two directions right-to-left and top-to-bottom). This is not limited in this application. A case in another direction is similar, and details are not described herein again.

Optionally, a direction along the gaze direction may alternatively be determined as the camera movement direction. For the gaze direction from bottom left to top right, a direction along the gaze direction may include left-to-right, bottom-to-top, or bottom-left-to-top-right (that is, a combination of the two directions left-to-right and bottom-to-top). This is not limited in this application. A case in another direction is similar, and details are not described herein again.

A specific process of generating the animation segment by using the second image is similar to that of generating the animation segment by using the first image. The mobile phone continues to perform content understanding on the second image by using the preset deep neural network model, and determines that a gaze direction of the dancer in the image is a direction from front right to back left (using a camera orientation of the camera movement as a reference). Then, according to preset logic, a direction opposite to the gaze direction-from left to right, is determined as the camera movement direction. The camera movement direction may be a movement direction of the tracking shot or the pan shot. Therefore, the tracking shot and/or the pan shot may be applied to the second image, that is, with the camera moving and/or panning from left to right to display the second image, thereby generating an animation segment corresponding to the second image.

FIG. 13 is a diagram of a playing process of the second image. FIG. 13 shows three frames of images of an animation segment corresponding to the second image. A tracking shot and/or a pan shot are/is applied to the second image. From comparison of the three frames of images shown in (a), (b), and (c) of FIG. 13, it can be seen that, as time progresses, the camera gradually moves and/or pans from left to right, while the dancer gradually moves from right to left within the image.

Optionally, the camera movement direction corresponding to the second image may alternatively be from back to front. In this case, a push shot may be applied to the second image, that is, with the camera gradually approaching the dancer in the image, so that a proportion of the image occupied by the dancer gradually increases.

Optionally, the camera movement direction corresponding to the second image may further include both from back to front and from left to right. In this case, not only is a push shot applied to the second image, but a tracking shot and/or a pan shot can also be applied simultaneously to the second image.

By sequentially splicing the animation segment corresponding to the first image and the animation segment corresponding to the second image, a complete animation can be obtained. When more images are selected by the user, more animation segments need to be spliced, that is, a duration of the complete animation is longer. The user may change a sequence of the plurality of animation segments by adjusting a sequence of the images.

In this embodiment of this application, the display content of the first image may be recognized to obtain pointing information (denoted as a first pointing direction), and a camera movement is then determined based on the first pointing direction. The first pointing direction herein is recognized pointing information in the first image. The first pointing direction may be, for example, a face orientation or a gaze direction of a photographed subject (for example, a person or an animal) in the foregoing embodiments, or may be a movement direction of a person, an animal, or an object, or may be an extension direction of a path, a river, or the like. The first pointing direction may include, for example, at least one of front-to-back, back-to-front, left-to-right, right-to-left, top-to-bottom, and bottom-to-top. The following continues to describe the first pointing direction herein by using an example. FIG. 14 is a diagram of a plurality of examples of the first pointing direction of the first image.

The first image shown in (a) of FIG. 14 includes a road, and an extension direction of the road in the image is from top left to bottom right. Therefore, the extension direction may be determined as the first pointing direction, and a camera movement direction may be further determined based on the first pointing direction. Optionally, the camera movement direction may be opposite to (against) the extension direction, for example, may be from right to left, from bottom to top, or from bottom right to top left. Optionally, the camera movement direction may be along (following) the extension direction, for example, may be from left to right, from top to bottom, or from top left to bottom right.

The first image shown in (b) of FIG. 14 includes a river, and an extension direction of the river in the image is approximately from top to bottom. Therefore, the direction may be determined as the first pointing direction, and a camera movement direction may be further determined based on the first pointing direction. Optionally, the camera movement direction may be opposite to the extension direction, for example, may be from bottom to top. Optionally, the camera movement direction may be along the extension direction, for example, may be from top to bottom. Optionally, the river meanders in a left-right direction in the image, and the camera movement direction may further include panning or reciprocating in the left-right direction. In other words, in this embodiment of this application, the camera movement direction (that is, the first camera movement direction) may include a specific direction, or may include a regular or irregular reciprocal panning in a direction. This is not limited in this application.

The first image shown in (c) of FIG. 14 includes a standing boy. One hand of the boy is placed on his waist, a finger of the other hand points to the left, and a gaze direction of the boy is from front to back (that is, a direction from inside a plane to outside the plane). To be specific, the first image shown in (c) of FIG. 14 includes a plurality of pointing directions. In this case, the camera movement direction may be determined based on any one of the pointing directions. For example, based on a pointing direction of the finger in the figure, the camera movement direction may be from left to right or from right to left. Alternatively, based on the gaze direction or a face orientation, the camera movement direction may be from back to front (a push shot) or from front to back (a pull shot). A specific pointing direction used to determine the camera movement direction may be determined based on a preset priority. For example, the face orientation or the gaze direction has a highest priority. Alternatively, the camera movement direction may be jointly determined with reference to a plurality of pointing directions.

The first image shown in (d) of FIG. 14 includes a running man. It can be learned from content understanding of the first image that a face orientation, a gaze direction, and a movement direction (that is, a running direction) of the man are all from left to right. Therefore, the first pointing direction may be determined as from left to right. In this case, the camera movement direction may be from left to right or from right to left.

The first image shown in (e) of FIG. 14 includes a boy riding a bike. The boy rides from right to left, and a gaze direction of the boy is from front to back (that is, a direction from inside a plane to outside the plane). In other words, the first image shown in (e) of FIG. 14 also includes a plurality of pointing directions. In this embodiment, the face orientation or the gaze direction may be preferentially used as the first pointing direction (to determine the camera movement direction) according to a pointing direction priority. In this case, the camera movement direction may be from back to front (a push shot) or from front to back (a pull shot).

The first image shown in (f) of FIG. 14 includes an animal doll and a balloon. It can be learned from content understanding of the first image that the balloon floats from bottom to top, and a gaze direction of the animal doll is toward top right, that is, toward the floating balloon. In other words, the first image shown in (f) of FIG. 14 also includes a plurality of pointing directions. In this embodiment, the camera movement direction may be jointly determined based on information such as a plurality of pointing directions (that is, a floating direction of the balloon and the gaze direction of the animal doll). For example, the camera movement direction may be from top to bottom or from bottom to top. In addition, the camera movement direction may alternatively be determined by preferentially using the gaze direction. Selection of a specific manner depends on internal implementation of the mobile phone or a preset rule. This is not specifically limited in this application.

FIG. 15 is a diagram of still yet another example of a playing process of the first image. It can be learned from content understanding of the first image shown in FIG. 15 that, the figure includes two children in total, and the two children have different face orientations and different gaze directions. The two children are running at the same time, and running directions are the same, both from left to right. In this case, the camera movement direction may be determined based on the running direction. For example, the camera movement direction may be from right to left or from left to right.

FIG. 15 shows three frames of images of an animation segment corresponding to the first image. A tracking shot and/or a pan shot may be applied to the first image. From comparison of the three frames of images shown in (a), (b), and (c) of FIG. 15, it can be seen that, as time progresses, the camera gradually moves and/or pans from left to right, while the children gradually move from right to left within the image.

In recent years, with continuous development of image processing technologies, it has become possible to generate a 3D animation based on an ordinary 2D static image. 3D graphics provide better display effect and have gained increasing popularity among users. Further, in the embodiment shown in FIG. 15, a depth map of the first image may be further obtained, and an animation may be jointly generated based on the determined camera movement direction, the first image, and the depth map of the first image.

Through the foregoing settings, the generated animation has 3D effect. Under different camera movement perspectives, relative sizes and relative positions (distances) of different objects in the image can vary, thereby enhancing a sense of image and immersion of the animation, improving display effect of the animation, and improving watching experience of the user.

Optionally, monocular depth estimation may be performed on the first image by using a deep neural network model, to obtain the depth map.

Optionally, the depth map may alternatively be obtained by using a stereoscopic camera or a time of flight (time of flight, TOF) camera. That is, in a process of obtaining the first image, the camera further obtains the depth map corresponding to the first image. In other words, the first image itself includes depth map information.

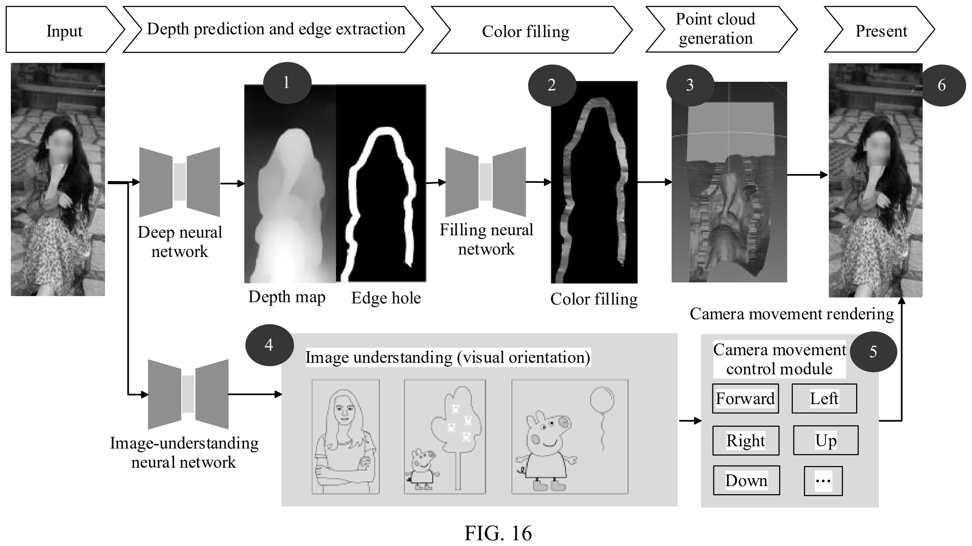

FIG. 16 is a schematic flowchart of generating a 3D animation according to a first image. As shown in FIG. 16, as a specific example, the 3D animation may be generated according to the following steps.

Step ①: Obtain a first image, perform monocular depth estimation on the first image by using a deep neural network model to obtain a depth map, and then segment regions with discontinuous depths, that is, perform depth layering on the depth map, to subsequently identify a depth edge region.

For example, performing depth layering on the depth map may be dividing the depth map into a foreground and a background, and identifying the depth edge region may be identifying a hole region in the background.

Step ②: Perform color filling (padding) on the depth edge region to obtain an edge background image. For example, the depth edge region (which may be, for example, the hole region in the background) may be filled by using a deep-filling neural network model and a color-filling neural network model, to obtain the edge background image.

Step ③: Generate a 3D point cloud based on the first image, the depth map, and the edge background image. The 3D point cloud herein is usually also referred to as a 3D mesh, a 3D feature point cloud, or the like.

Step ④: Understand display content of the first image by using an image-understanding neural network model, to determine a visual orientation (that is, a gaze direction). Subsequently, a camera movement direction is determined based on the visual orientation.

Step ⑤: Generate an animation based on the camera movement direction, the 3D point cloud, and the first image that are determined in the foregoing steps. For example, a camera movement control module controls a camera to move in the movement direction determined in a previous step. In a moving process, new-view image rendering is performed as a camera perspective changes, thereby generating a 3D animation from a 2D static image.

Step ⑥: Present the generated 3D animation on an electronic device, and a user watches the 3D animation. If animation effect is satisfactory, the 3D animation may be set as a dynamic wallpaper, shared to a social platform, or sent to friends and relatives for viewing.

Based on the foregoing plurality of embodiments, an embodiment of this application continues to provide a generation method for an animation. The generation method may be applied to the electronic device 100 provided in the foregoing embodiments, or applied to a chip or a chip system in the electronic device 100. The following is a method embodiment provided in this application. The method embodiment corresponds to the foregoing embodiment. For example, in the following description, a first camera movement direction corresponds to or is equivalent to the camera movement direction in the foregoing description.

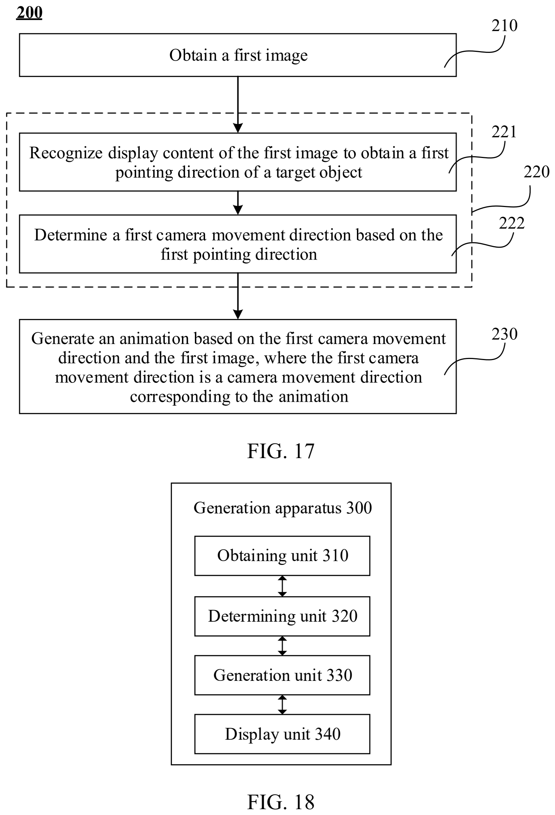

FIG. 17 is a schematic flowchart of a generation method 200 for an animation according to an embodiment of this application. As shown in FIG. 17, the generation method 200 includes the following steps.

Step 210: An electronic device obtains a first image.

Step 220: The electronic device determines a first camera movement direction based on display content of the first image.

Step 230: The electronic device generates the animation based on the first camera movement direction and the first image, where the first camera movement direction is a camera movement direction corresponding to the animation.

Specifically, the electronic device obtains the first image selected by a user, performs content understanding on the display content of the first image by using a preset AI model (for example, a neural network model), and determines the first camera movement direction based on an understanding result. Then, the animation is generated based on the first camera movement direction and the first image. The first camera movement direction herein is a camera movement direction. The camera movement may display the first image according to the first camera movement direction, thereby generating the animation. Because the camera movement direction is determined based on the display content of the image, the camera movement direction can be associated and matched with the display content of the image, and camera movements can be flexibly utilized based on the image content, so that a sense of image and immersion of the animation is enhanced and a high-quality animation with harmonious camera movements can be generated, thereby improving display effect of the animation.

A specific manner of "determining the first camera movement direction based on the image content" is not limited in this embodiment of this application. For example, a photographed subject in the first image may be recognized, and the first camera movement direction is determined based on a type of the photographed subject. The photographed subject herein may be, for example, a human, an animal, a plant, a mountain, a river, a toy, jewelry, fruit, a building, furniture, the sun, the moon, or a vehicle, but this is not limited thereto. Alternatively, the first camera movement direction may be determined based on a more specific type of the recognized photographed subject. For example, types of animals may be further classified into cats, dogs, lions, elephants, birds, or the like, and the first camera movement direction may be different for different types of animals. Additionally/Alternatively, the first camera movement direction may be determined based on factors such as a quantity of photographed subjects, a position of the photographed subject in an image, and a proportion of the image occupied by the photographed subject. In addition, the first camera movement direction may be further determined based on factors such as a layout and a tone of the image. In addition, when the photographed subject is a person, the first camera movement direction may be further determined based on factors such as an expression, an action, and a gesture of the person.

Optionally, when the animation is generated by using a plurality of images together, the "animation" in "the first camera movement direction is a camera movement direction corresponding to the animation" may also be understood as or replaced with an animation segment. For example, the plurality of images include a first image and a second image. An animation segment corresponding to the first image is a first animation segment, and an animation segment corresponding to the second image is a second animation segment. The first camera movement direction is a camera movement direction corresponding to the first animation segment, and a second camera movement direction is a camera movement direction corresponding to the second animation segment. The first animation segment and the second animation segment are spliced to form a complete animation.

Further, in this embodiment of this application, step 220 in which the electronic device determines the first camera movement direction based on the display content of the first image specifically includes the following.

Step 221: The electronic device recognizes the display content of the first image to obtain a first pointing direction of a target object.

Step 222: The electronic device determines the first camera movement direction based on the first pointing direction.

Specifically, the display content of the first image may be recognized to obtain the first pointing direction, and a camera movement is then determined based on the first pointing direction. The first pointing direction herein is recognized pointing information in the first image. The first pointing direction may be, for example, a face orientation or a gaze direction of a photographed subject (for example, a person or an animal) in the foregoing embodiments, or may be a movement direction of a person, an animal, or an object, or may be an extension direction of a path, a river, or the like. The first pointing direction may include, for example, at least one of front-to-back, back-to-front, left-to-right, right-to-left, top-to-bottom, and bottom-to-top.

Further, in this embodiment of this application, the first pointing direction may be pointing information of the target object in the image. That is, the display content of the first image may be recognized to obtain the first pointing direction of the target object, and a camera movement is then determined based on the first pointing direction. The target object herein may be any object in the first image, for example, a person (for example, the foregoing lady, dancer, or little boy), an animal (for example, the foregoing animal doll), a plant (for example, a tree), a scene (for example, the foregoing river), a building (for example, a house or a bridge), a road, a toy, jewelry, fruit, furniture, the sun, the moon, or a vehicle, but this is not limited thereto. The target object may be a photographed subject, or may not be a photographed subject. For example, the target object may be a river or a road in a shooting background. This is not limited in this application.

Optionally, there may be a plurality of objects in the first image, and the target object may be one of the plurality of objects. For example, the display content of the first image may be recognized to obtain the plurality of objects, and then the target object is determined based on the plurality of objects.

In other words, in some scenarios, when the first image is recognized, a plurality of objects (for example, a plurality of persons) may be recognized. In this case, the target object may be first determined based on the plurality of objects, and then the first pointing direction corresponding to the target object is recognized. According to the foregoing settings, the generation method provided in this application can meet use requirements in more scenarios, or the generation method provided in this application has a wider application scope. A specific implementation of determining the target object based on the plurality of objects is not specifically limited in this application.

Optionally, determining the target object based on the plurality of objects includes: determining a photographed subject in the plurality of objects as the target object; or determining the target object from the plurality of objects based on preset priority information; or determining the target object from the plurality of objects based on proportions of an image occupied by the plurality of objects; or randomly selecting the plurality of objects to obtain the target object.

In other words, the electronic device performs content understanding on the first image, and may recognize a plurality of objects. In this case, the electronic device may determine the target object based on the plurality of objects according to a preset logic rule. Optionally, the electronic device may determine a photographed subject (for example, a person or an animal) in the plurality of objects as the target object. Optionally, the electronic device may determine an object with a highest priority as the target object based on the preset priority information. For example, different objects such as a person, a river, a tree, a building, and a road have different priorities, and the person with the highest priority may be determined as the target object. Optionally, the electronic device may alternatively determine, from the plurality of objects, an object occupying a largest proportion of the image as the target object. For example, if there are a plurality of persons in the image, a person occupying a largest proportion of the image may be determined as the target object. Optionally, the plurality of objects may be randomly selected, and a selected object is determined as the target object.

Optionally, the electronic device determines the first camera movement direction based on the first pointing direction may be determining a direction following the first pointing direction as the first camera movement direction, or may be determining a direction opposite to the first pointing direction as the first camera movement direction, but this is not limited thereto.

A direction along or opposite to the first pointing direction is determined as the first camera movement direction. The method is simple and easy to implement, and the first camera movement direction can be better associated and matched with the image content, so that a sense of image and immersion of the animation is enhanced, thereby improving visual experience of the user.

Optionally, in another implementation, step 220 in which the electronic device determines the first camera movement direction based on the display content of the first image specifically includes:
the electronic device recognizes the display content of the first image to obtain a plurality of pointing directions; and
the electronic device determines the first camera movement direction based on the plurality of pointing directions.

In other words, the electronic device performs content understanding on the first image, and may recognize a plurality of pointing directions. In this case, the electronic device may determine the first camera movement direction based on the plurality of pointing directions according to a preset logic rule. For example, the electronic device may determine the first camera movement direction by using a pointing direction (for example, a face orientation or a gaze direction) with a highest priority based on the preset priority information. For another example, the electronic device may determine the first pointing direction from a plurality of pointing directions with reference to other information (for example, a type, a layout, and a proportion of the image occupied by the photographed subject) of the image content, and then determine the first camera movement direction based on the first pointing direction. For another example, the plurality of pointing directions may be used as input parameters, and the first camera movement direction may be jointly determined according to a preset rule or algorithm (for example, an AI model). A specific implementation is not limited in this application.

Further, in this embodiment of this application, the generation method 200 further includes: The electronic device obtains a depth map of the first image. Step 230 in which the electronic device generates the animation based on the first camera movement direction and the first image specifically includes the following.

The electronic device generates the animation based on the first camera movement direction, the depth map, and the first image.

Through the foregoing settings, the generated animation has 3D effect. Under different camera movement perspectives, relative sizes and relative positions (distances) of different objects in the image can vary, thereby enhancing a sense of image and immersion of the animation, improving display effect of the animation, and improving watching experience of the user.

Optionally, monocular depth estimation may be performed on the first image by using a deep neural network model, to obtain the depth map.

Optionally, the depth map may alternatively be obtained by using a stereoscopic camera or a time of flight (time of flight, TOF) camera. That is, in a process of obtaining the first image, the camera further obtains the depth map corresponding to the first image. In other words, the first image itself includes depth map information.

Further, that the electronic device generates the animation based on the first camera movement direction, the depth map, and the first image specifically includes the following.

The electronic device performs depth layering on the depth map to identify a depth edge region.

The electronic device performs color filling on the depth edge region to obtain an edge background image.

The electronic device generates a 3D point cloud based on the first image, the depth map, and the edge background image.

The electronic device generates the animation based on the first camera movement direction and the 3D point cloud.

Optionally, the 3D point cloud may include color information at different positions. In this case, the animation may be directly generated based on the first camera movement direction and the 3D point cloud.

Optionally, when the 3D point cloud does not include the color information, the animation may be generated based on the first camera movement direction, the 3D point cloud, and (color information of) the first image.

Optionally, the generation method 200 further includes: displaying the animation.

Optionally, the animation herein may be animation effect (dynamic effect) that is rendered and displayed (temporarily output) in real time by the electronic device during display. The temporarily output animation effect may further be generated or saved as a video file or a dynamic GIF image, for playing in subsequent display or for convenient social sharing by the user.

Optionally, the animation is displayed as a dynamic wallpaper. In this way, a source of the dynamic wallpaper of a terminal can be broadened.

Optionally, the animation is a video or a GIF image.

FIG. 18 is a block diagram of a generation apparatus 300 for an animation according to an embodiment of this application. The generation apparatus 300 may be an electronic device (for example, the electronic device 100 or the mobile phone in the foregoing embodiments) in this embodiment of this application, or may be a processor or a chip in an electronic device. As shown in FIG. 18, the generation apparatus 300 includes an obtaining unit 310, a determining unit 320, a generation unit 330, and a display unit 340.

The obtaining unit 310 is configured to obtain a first image.

The determining unit 320 is configured to determine a first camera movement direction based on display content of the first image.

The generation unit 330 is configured to generate the animation based on the first camera movement direction and the first image. The first camera movement direction is a camera movement direction corresponding to the animation.

Optionally, the determining unit 320 is specifically configured to: recognize the display content of the first image to obtain a first pointing direction of a target object; and determine the first camera movement direction based on the first pointing direction.

Optionally, before recognizing the display content of the first image to obtain the first pointing direction of the target object, the determining unit 320 is specifically configured to: recognize the display content of the first image to obtain a plurality of objects; and determine the target object based on the plurality of objects.

Optionally, the determining unit 320 is specifically configured to: determine a photographed subject in the plurality of objects as the target object; or determine the target object from the plurality of objects based on preset priority information; or determine the target object from the plurality of objects based on proportions of an image occupied by the plurality of objects; or randomly select the plurality of objects to obtain the target object.

Optionally, the determining unit 320 is specifically configured to: determine a direction along the first pointing direction as the first camera movement direction; or determine a direction opposite to the first pointing direction as the first camera movement direction.

Optionally, the first pointing direction includes a face orientation, a gaze direction, a movement direction, or an extension direction.

Optionally, the first pointing direction includes at least one of front-to-back, back-to-front, left-to-right, right-to-left, top-to-bottom, and bottom-to-top.

Optionally, the determining unit 320 is specifically configured to: recognize the display content of the first image to obtain a plurality of pointing directions; and determine the first camera movement direction based on the plurality of pointing directions.

Optionally, the determining unit 320 is specifically configured to: determine the first pointing direction from the plurality of pointing directions based on the preset priority information, and determine the first camera movement direction based on the first pointing direction; or determine the first pointing direction from the plurality of pointing directions based on other display information in the display content of the first image, and determine the first camera movement direction based on the first pointing direction, where the other display information is information other than the plurality of pointing directions; or determine the first camera movement direction based on the plurality of pointing directions and a preset artificial intelligence model.

Optionally the obtaining unit 310 is further configured to obtain a depth map of the first image. The generation unit 330 is specifically configured to generate the animation based on the first camera movement direction, the depth map, and the first image.

Optionally, the obtaining unit 310 is specifically configured to perform monocular depth estimation on the first image to obtain the depth map.

Optionally, the generation unit 330 is specifically configured to: perform depth layering on the depth map to identify a depth edge region; perform color filling on the depth edge region to obtain an edge background image; generate a 3D point cloud based on the first image, the depth map, and the edge background image; and generate the animation based on the first camera movement direction and the 3D point cloud.

Optionally, the 3D point cloud may include color information at different positions. In this case, the animation may be directly generated based on the first camera movement direction and the 3D point cloud.

Optionally, when the 3D point cloud does not include the color information, the animation may be generated based on the first camera movement direction, the 3D point cloud, and (color information of) the first image.

Optionally, the generation apparatus 300 further includes the display unit 340, configured to display the animation.

Optionally, the animation is displayed as a dynamic wallpaper.

Optionally, the animation is a video or a GIF image.

The generation apparatus 300 corresponds to the electronic device in the foregoing method embodiment. The obtaining unit 310 is configured to perform step 210. The determining unit 320 is configured to perform step 220 (for example, including step 221 and step 222). The generation unit 330 is configured to perform step 230.

An embodiment of this application further provides an electronic device, including: a memory, storing instructions; and a processor. When the instructions are run by the processor, the electronic device is enabled to perform the method or the steps provided in any one of the foregoing embodiments. The electronic device may be, for example, the electronic device 100 or the mobile phone in the foregoing embodiments.

An embodiment of this application further provides a computer-readable storage medium. The computer-readable storage medium stores a computer program. When the computer program is run on a computer, the computer is enabled to perform the method or the steps provided in any one of the foregoing embodiments.

An embodiment of this application further provides a computer program product, including computer program code. When the computer program code is run on a computer, the computer is enabled to perform the method or the steps provided in any one of the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be indirect couplings or communication connections through some interfaces, apparatuses, or units, and may be in electrical, mechanical, or other forms.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A generation method for an animation, comprising:
obtaining a first image;
determining a first camera movement direction based on display content of the first image; and
generating the animation based on the first camera movement direction and the first image, wherein the first camera movement direction is a camera movement direction corresponding to the animation.

2. The generation method according to claim 1, wherein determining the first camera movement direction based on the display content of the first image comprises:
recognizing the display content of the first image to obtain a first pointing direction of a target object; and
determining the first camera movement direction based on the first pointing direction.

3. The generation method according to claim 2, wherein before recognizing the display content of the first image to obtain the first pointing direction of the target object, the method further comprises:
recognizing the display content of the first image to obtain a plurality of objects; and
determining the target object based on the plurality of objects.

4. The generation method according to claim 3, wherein determining the target object based on the plurality of objects comprises:
determining a photographed subject in the plurality of objects as the target object; or
determining the target object from the plurality of objects based on preset priority information; or
determining the target object from the plurality of objects based on proportions of an image occupied by the plurality of objects; or
randomly selecting the plurality of objects to obtain the target object.

5. The generation method according to any one of claims 2 to 4, wherein determining the first camera movement direction based on the first pointing direction comprises:
determining a direction along the first pointing direction as the first camera movement direction; or
determining a direction opposite to the first pointing direction as the first camera movement direction.

6. The generation method according to any one of claims 2 to 5, wherein the first pointing direction comprises a face orientation, a gaze direction, a movement direction, or an extension direction.

7. The generation method according to any one of claims 2 to 6, wherein the first pointing direction comprises at least one of front-to-back, back-to-front, left-to-right, right-to-left, top-to-bottom, and bottom-to-top.

8. The generation method according to any one of claims 1 to 7, further comprising:
obtaining a depth map of the first image; and
generating the animation based on the first camera movement direction and the first image comprises:
generating the animation based on the first camera movement direction, the depth map, and the first image.

9. The generation method according to any one of claims 1 to 8, further comprising: displaying the animation.

10. The generation method according to any one of claims 1 to 9, wherein the animation is displayed as a dynamic wallpaper.

11. The generation method according to any one of claims 1 to 10, wherein the animation is a video or a GIF image.

12. A generation apparatus for an animation, comprising:
an obtaining unit, configured to obtain a first image;
a determining unit, configured to determine a first camera movement direction based on display content of the first image; and
a generation unit, configured to generate the animation based on the first camera movement direction and the first image, wherein the first camera movement direction is a camera movement direction corresponding to the animation.

13. The generation apparatus according to claim 12, wherein the determining unit is specifically configured to:
recognize the display content of the first image to obtain a first pointing direction of a target object; and
determine the first camera movement direction based on the first pointing direction.

14. The generation apparatus according to claim 13, wherein before recognizing the display content of the first image to obtain the first pointing direction of the target object, the determining unit is specifically configured to:
recognize the display content of the first image to obtain a plurality of objects; and
determine the target object based on the plurality of objects.

15. The generation apparatus according to claim 14, wherein the determining unit is specifically configured to:
determine a photographed subject in the plurality of objects as the target object; or
determine the target object from the plurality of objects based on preset priority information; or
determine the target object from the plurality of objects based on proportions of an image occupied by the plurality of objects; or
randomly select the plurality of objects to obtain the target object.

16. The generation apparatus according to any one of claims 13 to 15, wherein the determining unit is specifically configured to:
determine a direction along the first pointing direction as the first camera movement direction; or
determine a direction opposite to the first pointing direction as the first camera movement direction.

17. The generation apparatus according to any one of claims 13 to 16, wherein the first pointing direction comprises a face orientation, a gaze direction, a movement direction, or an extension direction.

18. The generation apparatus according to any one of claims 13 to 17, wherein the first pointing direction comprises at least one of front-to-back, back-to-front, left-to-right, right-to-left, top-to-bottom, and bottom-to-top.

19. The generation apparatus according to any one of claims 12 to 18, wherein the obtaining unit is further configured to:
obtain a depth map of the first image; and
the generation unit is specifically configured to:
generate the animation based on the first camera movement direction, the depth map, and the first image.

20. The generation apparatus according to any one of claims 12 to 19, wherein the generation apparatus further comprises:
a display unit, configured to display the animation.

21. The generation apparatus according to any one of claims 12 to 20, wherein the animation is displayed as a dynamic wallpaper.

22. The generation apparatus according to any one of claims 12 to 21, wherein the animation is a video or a GIF image.

23. An electronic device, comprising:
a memory, wherein the memory stores instructions; and
a processor, wherein when the instructions are run by the processor, the electronic device is enabled to perform the method according to any one of claims 1 to 11.

24. A computer-readable storage medium, wherein the computer-readable storage medium stores a computer program, and when the computer program is run on a computer, the computer is enabled to perform the method according to any one of claims 1 to 11.

25. A computer program product, comprising computer program code, wherein when the computer program code is run on a computer, the computer is enabled to perform the method according to any one of claims 1 to 11.
